Europäisches Patentamt

European Patent Office

Office européen des brevets

(19)

(11) EP 0 966 111 A2

(12) EUROPEAN PATENT APPLICATION

(43) Date of publication:
22.12.1999 Bulletin 1999/51

(51) Int. Cl.$^6$: H04B 1/707

(21) Application number: 99111042.0

(22) Date of filing: 14.06.1999

(84) Designated Contracting States:
AT BE CH CY DE DK ES FI FR GB GR IE IT LI LU
MC NL PT SE
Designated Extension States:
AL LT LV MK RO SI

(30) Priority: 15.06.1998 JP 18559298
17.02.1999 JP 3930399

(71) Applicants:
• Kuroyanagi, Noriyoshi
  Higashiyamato-shi, Tokyo 207-0022 (JP)
• Suehiro, Naoki
  Tsukuba-shi, Ibaraki 305-0022 (JP)
• FUJI ELECTRIC CO., LTD.
  Kawasaki-shi, Kanagawa 210-0856 (JP)

(72) Inventors:
• Kuroyanagi, Noriyoshi,
  7-1204 Sakuragaoka-danchi
  Higashiyamato-shi, Tokyo 207-0022 (JP)
• Suehiro, Naoki,
  Tsukuba-shi, Ibaragi 305-0031 (JP)

• Otake, Kohei,
  1941, Shinyoshida-cho
  Kanagawa 223-0056 (JP)
• Matsufuji, Shinya
  Saga-shi, Saga 840-0054 (JP)
• Ozawa, Satoru
  Hino-shi, Tokyo 191-0062 (JP)
• Shibatani, Masao,
  2401-1145, 4-2, Shiomidai
  Kanagawa 235-0022 (JP)
• Kondo, Shiro,
  Fuji Electric Co., Ltd.,
  Kawasaki-shi, Kanagawa 210-0856 (JP)
• Yasukawa, Kazuyuki,
  Fuji Electric Co., Ltd.,
  Kawasaki-shi, Kanagawa 210-0856 (JP)

(74) Representative:
DIEHL GLAESER HILTL & PARTNER
Patentanwälte
Königstrasse 28
22767 Hamburg (DE)

(54) **Matched filter output analysis for interference control in a CDMA communications system**

(57) To produce a symbol frame waveform, a transmitter (TX) uses a reference signal wave of orthogonal code sequence whose auto-correlation function takes 0 at any shift except the 0 shift, and generates a transmitting symbol frame which is made by modulating the reference signal wave with transmitting information. A receiver (RX) applies the received frame waveform containing the transmitted signal wave and a noise component to a matched filter (34) for obtaining the cross-correlation function with the reference signal wave, and analyzes the partial cross-correlation function at the uncorrelated region. Thus, the reference signal wave component contained in the received frame waveform can be detected with little influence of noise by estimating the noise-dependent cross-correlation function to be obtained when only the noise component is applied to the matched filter (34), and by removing the estimated function from the cross-correlation function.

TX

$$[= g(t) * w(t)]$$

FIG. 5

EP 0 966 111 A2

RX

FIG. 8

## Description

## Background of the Invention

## Field of the Invention

The present invention relates to a communications system, realized through spread-spectrum modulation, capable of estimating the noise included in the transmission process, and improving the signal-to-noise (SN) ratio after the demodulation using the estimated noise.

## Description of the Related Art

In the spread-spectrum communications, an original transmission data signal can be transformed into a signal having much broader frequency band by modulating transmission data using a spreading code sequence, and the spreading signal can be transmitted. As a result, the transmission power per unit frequency can be reduced, and therefore the disturbance to other communications can be minimized. Additionally, this communications system has a number of features. For example, the environmental noise can be reduced in the transmission process. However, since the same band is shared by the communications of a base station and many mobile stations in the mobile communications, the disturbance of interference noise is outstanding. Therefore, the number of channels simultaneously available for communications in the service areas (cells) of each base station is strictly limited by the interference noise.

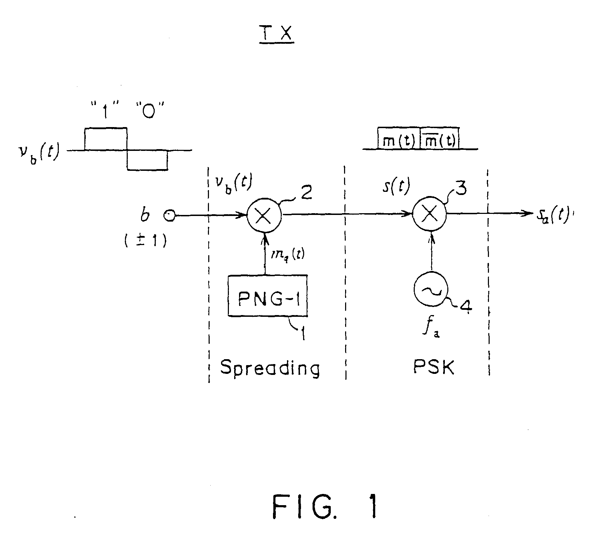

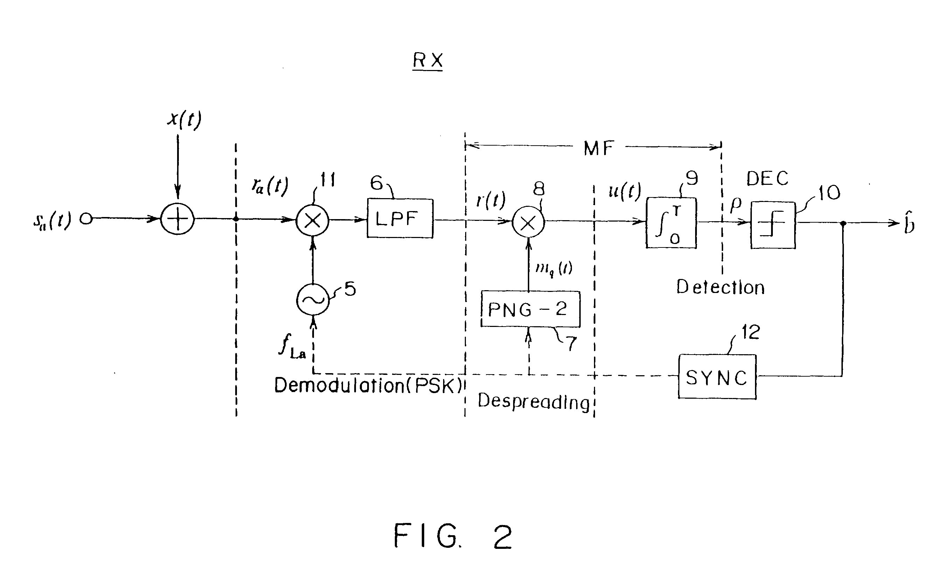

FIG. 1 is a block diagram of the common configuration of the conventional transmitter in the mobile communications system for the spread-spectrum communications (communications by the DS-SS system) through a radio communications path. FIG. 2 is a block diagram of the common configuration of the conventional receiver in the mobile communications system.

The transmitter TX shown in FIG. 1 obtains baseband transmission output s(t) by a multiplier 2 multiplying the binary transmission data b (signal $v_b(t)$) by the spreading code sequence $m_q(t)$ generated by a reference code sequence generator (PNG-1) 1. In addition, a transmission wave $s_a(t)$ of a radio frequency band is generated by a modulator 3 modulating the carrier wave of the frequency $f_a$ generated by an oscillator 4 from the baseband transmission output s(t). The generated wave is transmitted to a radio communications path through a transmission filter and an antenna not shown in the drawings. It is common to use, as a spreading code sequence $m_q(t)$, pseudo-noise (PN sequence) having the bit period length equal to that of the binary transmission data b. Described below is an example of using the sequence of the maximum period (M sequence) m(t) which is the most popularly used in the PN sequences.

A receiver RX shown in FIG. 2 receives a spread-spectrum modulated signal $s_a(t)$ through an antenna and a reception filter, performs required equalizing amplification (an equalizer is omitted in the drawings), and obtains a baseband signal by multiplying at a multiplier 11 the received radio signal $r_a(t)$ containing the noise x(t) added in the transmission process and the output with frequency $f_{La}$ (=$f_a$) of a local oscillator 5, and then limiting the band of the obtained signal using a low-pass filter (LPF) 6. Thereby, the signal $r_a(t)$ can be demodulated into a baseband received signal r(t) (coherent demodulation, or non-coherent demodulation). This baseband spread signal r(t) has the same M sequence code $m_q(t)$ as the code used in the above described transmitter TX of the desired station. This code sequence is generated by a reference code sequence generator (PNG-2) 7 and provided for a multiplier 8. The despread output u(t) obtained as the output of the multiplier 8 is integrated by an integrator 9 for the period of the sequence length T (1 frame length) of the M sequence, and the correlation output ρ is obtained. The polarity of the output ρ is decided by a decision circuit (DEC) 10 at the end of the above described frame, as a result the transmitted binary data $\hat{b}$ is detected.

The control signal generated based on the detected data is applied to the control terminals of the reference code sequence generator (PNG-2) 7 and the local unit oscillator (carrier wave generator) 5 through a synchronization circuit (SYNC) 12 so that the phases of the carrier wave and the M sequence may be synchronized with those of the received signal $r_a(t)$ (at the transmitter TX or the receiver RX, often the allocation order of the modulators (demodulators) is exchanged, but the entire modulation/demodulation function remains unchanged).

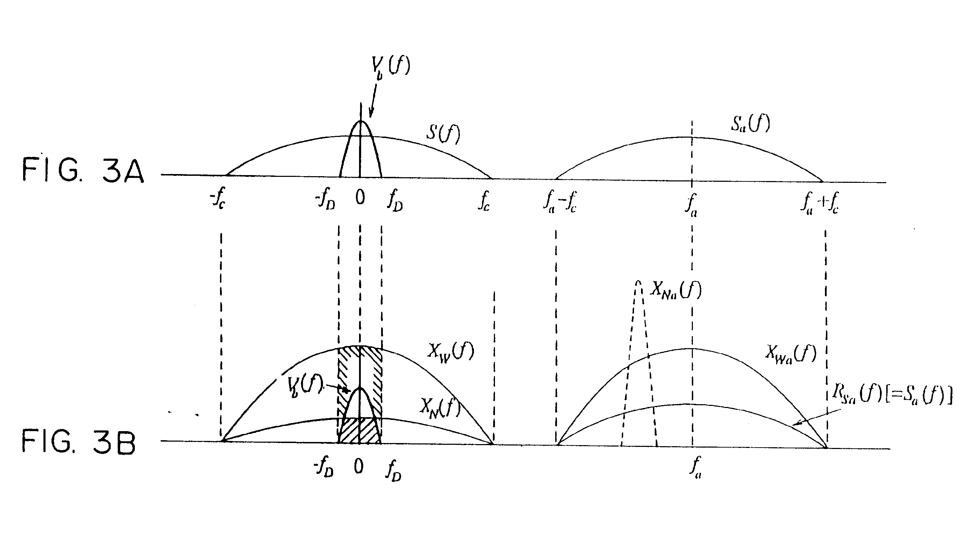

FIGS. 3A and 3B show a model of the characteristics of a frequency spectrum of a transmitted/received signals (transmission wave s(t)). FIG. 3A shows a spectrum of a transmitted signal consisting of the spectrum of the baseband signal on the left, and the spectrum of the radio frequency band one. The spectrum shown in FIG. 3A corresponds to the signals shown in FIG. 1 or 2 as follows.

transmitting signals        :data signal $v_b(t) \leftrightarrow v_b(f)$
                            : baseband spread output $s(t) \leftrightarrow S(f)$
                            : radio band output $s_a(t) \leftrightarrow S_a(f)$

In FIGS. 3A and 3B, $f_c$ (= $T_c^{-1}$ : $T_c$ indicates the chip period of a spreading code) indicates the chip rate, and $f_D$ (= $T^{-1}$) indicates the information rate. The spectrum of a received signal $r_a(t)$ (= $r_{sa}(t) + x_{Na}(t) + x_{wa}(t)$) in the radio frequency band is shown on the right in FIG. 3B. The signal shown in FIG. 3B corresponds to the signal shown in FIG. 1 or 2 as follows. In this example, it is assumed that the attenuation or distortion during the transmission process is compensated by an equalizer of the receiver, and therefore $r_{sa}(t) = s_a(t)$ .

received radio band signal     :signal $v_{sa}(t) \leftrightarrow R_{sa}(f)[=S_a(f)]$
    : narrow band noise $x_{Na}(t) \leftrightarrow X_{Na}(f)$
    : broad band noise $z_{wa}(t) \leftrightarrow X_{wa}(f)$

The spectrum of the despread output u(t) (= $v_b(t) + x_N(t) + x_w(t)$) of r(t) is shown in the left in FIG. 3B, and has the following correspondence.

despread baseband output     :data signal $v_b(t) \leftrightarrow V_b(f)$
    : narrow band noise $x_N(t) \leftrightarrow X_N(f)$
    : broad band noise $x_w(t) \leftrightarrow X_w(f)$

As clearly indicated in FIGS. 3A and 3B, the narrow band noise $X_{Na}(f)$ added in the transmission process is despread into $X_N(f)$, and the demodulation output component $X_N$ ($|f| < f_D$) (shadow portion shown in FIG. 3B) decreases by the spreading gain Gp (described later) from the entire power. However, the broad band noise $X_{wa}(f)$ is not spread through the despreading, but is obtained as a spectrum $X_w(f)$ having a substantially equal band width. The $X_{wa}(f)$ normally refers to an interference component between different stations. When there are a number of stations, the interference power occupies the most part of the noise power. The power of the component not distinguished from the signal component in the demodulation output $X_w$ ($|f| < f_D$) (indicated by dotted lines shown in FIG. 3B) of broad band noise is normally represented by a value proportional to the cross-correlation between the spreading sequence of a desired station and the spreading sequence of another station, and the value often cannot be ignored as compared with the signal power of $V_b(f)$. Thus, the SS system is much dependent on the interference noise, which causes the number of simultaneously communicating stations in a cell to be limited.

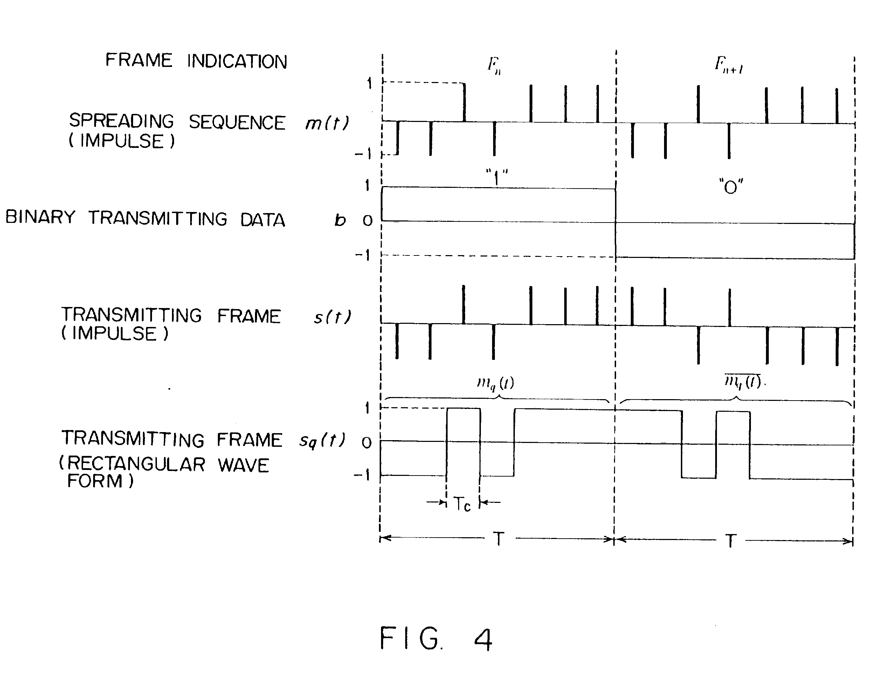

m(t) shown in FIG. 4 is an example of a spreading code (impulse) sequence with the sequence length L = 7 (chip) in the conventional direct sequence spread-spectrum communications system (DS-SS). Binary transmission data b is shown below m(t). s(t) shown in FIG. 4 is an output product of the binary information b (=1, -1) and m(t), and the figure shows a waveform corresponding to the symbol frames $F_n$ and $F_{n+1}$. T indicates a symbol frame period, and $T_c$ indicates a chip period. The spreading sequences m(t) the $m_q(t)$ are represented as follows.

$$m(t) = \sum_{i=0}^{L-1} c_i \delta(t-iT_c) \qquad 0 \leq t \leq T, \qquad c_i \, \varepsilon \pm 1 \qquad (1)$$

$$T = LT_c \qquad (2)$$

$$m_q(t) = \sum_{i=0}^{L-1} c_i q(t-iT_c) \qquad 0 \leq t \leq T, \qquad c_i \, \varepsilon \pm 1 \qquad (3)$$

$$q(t) = 1 \left.\begin{matrix} \\ \\ \end{matrix}\right\} \quad |t| \leq \frac{T_c}{2} \atop = 0 \quad |t| > \frac{T_c}{2} \qquad (4)$$

where $c_i$ (i = 0, 1, 2, ..., L-1) is the i-th chip amplitude of the spreading sequence, $\delta$ is delta function, and q is a rectangular wave function. A rectangular wave is used as the transmitting baseband waveform so that the receiver can receive the sufficient reception power.

As shown in FIG. 4, the rectangular wave $m_q(t)$ is the output corresponding to the transmitting information '1' (b=1), and the inverted output $\overline{m_q(t)}$ is the output corresponding to '0' (b=-1). The rectangular wave is further converted for radio frequency band through PSK modulation. Assuming that the chip rate is

$$f_c = T_C^{-1} ,$$

the signal band is limited to $(f_a - f_c)$ to $(f_a + f_c)$ with the transmission filter. Therefore, the rectangular wave contained in the transmitting signal is subject to a large waveform distortion. However, for the simplicity, the waveform distortion is omitted first. The frequency band of a baseband data signal is about $f_D = 1/T$, and that of the output $s_a(t)$ after spreading is about

$$f_c = T_C^{-1} ,$$

and can be expressed as follows

$$f_c = L f_D \qquad (5)$$

Thus, the band width is extended L times. By L times band increase, the noise suppression effect in the conventional DS-SS system is given by the followine equation where Gp is the process gain.

$$Gp = 10 \cdot \log_{10} L \qquad (6)$$

That is, since the spread-spectrum modulated signal occupies considerably broad frequency band, the colored noise power can be reduced down to 1/L based on the above described principle, thereby indicating an excellent effect on the colored noise. However, when the interference noise is taken into account, the number $N_s$ of simultaneous communications is much less than L despite L times wide band is used. As a result, the simultaneous transmission capacity is ($N_s$/L) times as many channels as those for the time division multiplexing system (TDMA). Therefore, as long as the capacity comparison is done with one service zone. The frequency band utilization efficiency is much lower than that of the TDMA system. Thus, the reason why $N_s$ cannot be designed so large as L is that the cross-correlation coefficient between the PN sequences assigned to the desired and other interference mobile stations cannot be sufficiently small. This value varies according to the phases of these sequences, and the average value is $1/\sqrt{L}$. However, when the interference sequences are data-modulated and the frame phases between the desired signal and the interference frams are different, the worst correlation value is much larger than the above average value. As a result, cases where a number of interference waves having large cross-correlation come into for a long time take place, cousing increase in the code error rate.

If self-interference noise is generated due to the delay waves caused by multipath in the propagation process, inter-station interference noise is increased, and the reception SN ratio is decreased due to the fading, then the error rate is degraded. These factors mainly reduce the frequency utilization efficiency of CDMA systems.

To suppress the inter-station interference noise (broad band noise), the following two systems have been developed.

    (A) Interference canceler system
    (B) Least mean square error (LMSE) - decision feedback (DFB) system

Let us describe first the system (A). The receiver performs a conventional demodulation process for a received signal r(t) using address reference spreading sequences of all the users (number of users is (K) in a cell. That is, k receivers are provided, and K initial detection outputs $\hat{b}_1$, $\hat{b}_2$, ..., $\hat{b}_K$ are output. To obtain the correct value for the information $b_1$, these outputs $\hat{b}_2$, $\hat{b}_3$, ..., $\hat{b}_K$ are respectively multiplied by each of the associated spreading sequences, and by the estimated characteristics of the associated transmission paths to generate a pseudo-interference wave $\hat{x}_1(t)$. As a consequence, the interference removed reception signal $\hat{r}_1(t) = r(t) - \hat{x}_1(t)$ is produced by subtracting the component from the reception signal, and the demodulation process is performed again for the $\hat{r}_1(t)$ to obtain the final detection output $\hat{b}$. [Reference: Ranijee Prasad: 'CDMA for Wireless Personal Communications,' Artech House, 1996; referenced page 316 through 327]

This system depends on the precision of the initial detection outputs $\hat{b}_1$, $\hat{b}_2$, ..., $\hat{b}_K$, and the precision of the estimated characteristics of the transmission paths. When K exceeds a half of the code length L, the performance is badly deteriorated. In addition, since the equipment scale of the entire system is very large, it is not a practical system.

In the system (B), a reception signal is applied to a transversal orthogonal filter, only the noise contained in the reception signal is orthogonalized as much as possible, and the output is despread using the reference spreading sequence according to the conventional DS-SS system, thereby obtaining a hard decision output $\hat{b}$. The orthogonal-

ization described above is achieved by controlling the coefficient of the transversal filter. The residue error between the despread output obtained above and the right value $\hat{b}$ is fed back. That is, the coefficient is precisely adjusted using, for example, LMSE algorithm, so that the residue erroe may reduce as much as possible. [Reference: Predrag B. Rapajic and Branka S. Vucetic, 'Adaptive Receiver Structures for Asynchronous CDMA Systems, 'IEEE JSAC, vol. 12, No. 4, May, 1994]

This method is effective when the periodic stationarity of interference noise can be assumed, but it is not a practical assumption for a mobile system. That is, it is necessary for a desired operation to use a long stationary period during which the propagation paths and the interference waves are unchanged. In addition, when the received noise is a little excessive by large, the coefficient control is mishandle often, thereby making the residue error larger. As a consequence, it is very difficult to realize a stable operation.

## Summary of the Invention

The present invention aims at providing a technology of performing a practical and stable process to cope with all the noise including broad band noise such as generated by inter-station interference, etc.

The present invention according to the first claim has been developed to process to cope with the noise which increase the code error rate of the conventional spread-spectrum communications system. This technology is to determine a signal component based on a demodulated output with little influence of noise by enhancing the SN ratio after the demodulation much more than the process gain Gp through the processes of transmitting a chip impulse sequence of a spreading code after applying it to convolutional modulation, and of analyzing the cross-correlation output obtained by applying a received frame to a matched filter. The present invention can be widely applied to direct sequence (DS-SS) and frequency hopping (FH-SS) spread-spectrum communications.

In the matched filter output analysis interference wave control CDMA communications system according to the first aspect (corresponding to claim 1) of the present invention, the transmitter for transmitting as the reference signal wave the symbol frame waveform generated based on the transmitting information and an orthogonal code sequence for use of addressing whose auto-correlation function takes 0 or a relatively small value at the uncorrelated region other than the correlated region of the 0 shift and its vicinity, and generating the transmitting wave with amplitude, phase, etc. of the reference signal wave corresponding to the transmitting information. On the other hand, the receiver for applying the received frame waveform containing the transmitting wave and noise component to the matched filter in order to obtain the cross-correlation function between the received frame waveform and the reference signal wave, and by analyzing a partial correlation function on the uncorrelated region of the cross-correlation function. Thus, detecting the reference signal wave component contained in the received frame waveform with little influence of the noise by estimating a noise-dependent cross-correlation function such as obtained when only the noise component is applied to the matched filter, and then by removing the estimated function from the cross-correlation function.

In the matched filter output analysis and interference wave control CDMA communications system according to the second embodiment of the present invention (corresponding to claim 5), the transmitter for transmitting the transmitting frame generated by modulating an extended sequence obtained by adding dummy chips to an address spreading sequence with transmitting information. The receiver for receiving the received frame synchronous with the transmission frame transmitted by the desired station, generating a received core frame by removing the dummy chips from the received frame, and generating the correlation function with the core frame by using the matched filter matched to the address spreading sequence used by the transmitter, and determining the transmitting information from the correlation function output.

In the matched filter output analysis and interference wave control CDMA communications system according to the third embodiment of the present invention (corresponding to claim 13), the transmitter for generating and transmitting the transmitting pair frame consisting of the baseband extended transmitting frame and the additional transmitting frame by providing the extended sequence with at least one of the trailing portion and the leading portion of the address spreading sequence added to the spreading sequence, and the additional sequence arranged in a time division manner with the extended sequence, and by modulating the pair of sequences comprising the extended sequence and the additional sequence according to transmitting information. The receiver for extracting the synchronously received pair frame addressed to the desired station from the received signal, extracting the extended received frame corresponding to the extended transmitting frame and the additional received frame corresponding to the additional transmitting frame from the synchronously received pair frame, generating a demodulation output by demodulating the extended received frame, generating an interference control output consisting of the estimated value of disturbance components due to the interference wave from the additional received frame, and restoring the transmitting information from the demodulation output and the interference control output.

The matched filter output analysis and interference wave control CDMA communications system according to the fourth embodiment of the present invention (corresponding to claim 22), the transmitter for modulating with transmitting information the extended sequence obtained by adding the leading additional sequence and the trailing additional sequence respectively to the leading portion and the trailing portion of an address spreading sequence, modulating the modulated output with a scramble sequence which belongs to a family of code sequences having a small correlation region indicating 0 or a small absolute value around the zero shift except the zero shift of an auto-correlation function and indicating 0 or a small absolute value around the zero shift including the zero shift of the cross-correlation function, and transmitting the baseband extended frame modulated with of the scramble sequences. The receiver for extracting the synchronously received extended frame synchronous with the desired station from the received signal, extracting the received core frame containing the address spreading sequence of the desired station from the synchronously received extended frame, descrambling the received core frame using the scramble sequences, thereby generating a descramble frame, and restoring the transmitting information from the correlation function output obtained by applying the descrambled frame to the matched filter matched to the address spreading sequence of the desired station.

**Brief Description of the Drawings**

FIG. 1 shows the configuration of a transmitter of DS-SS conventional transmission systems;

FIG. 2 shows the configuration of a receiver of DS-SS conventional transmission systems;

FIGS. 3A and 3B show the frequency spectrum characteristics of the transmitting and received signals of a DS-SS system;

FIG. 4 shows a spreading sequence and a transmitting frame waveform used for a direct sequence spread-spectrum modulation system;

FIG. 5 is a block diagram of the configuration of a transmitter circuit according to the first embodiment of the present invention;

FIGS. 6A through 6D show the principle of the sampling function modulation waveform according to the first embodiment of the present invention;

FIG. 7 is a block diagram of the first modulator (MOD 1) configuration of the transmitter circuit according to the first embodiment of the present invention;

FIG. 8 is a block diagram of the configuration of a receiver circuit according to the first embodiment of the present invention;

FIG. 9 is a block diagram of the matched filter configuration of the receiver according to the first embodiment of the present invention;

FIGS. 10A through 10C show an orthogonal sequence and the auto-correlation function according to the first embodiment of the present invention;

FIG. 11 shows the estimating process on the noise having no DC component according to the first embodiment of the present invention;

FIGS. 12A-1 through 12B-3 show the analizing waveforms for estimating the time waveform of an entire region from the uncorrelated region according to the first embodiment of the present invention;

FIGS. 13A through 13C show the relationship between the alternate current component of an orthogonal noise and the cross-correlation function according to the first embodiment of the present invention;

FIGS. 14A and 14B show an embodiment of analyzing general noise according to the first embodiment of the present invention;

FIGS. 15A through 15C show the address spreading sequence and the correlation function characteristics according to the second embodiment of the present invention;

FIG. 16 shows the relationship between the types of input noise and the correlation function output according to the second embodiment of the present invention;

FIG. 17 is a block diagram of the configuration of a transmitter circuit according to the second embodiment of the present invention;

FIG. 18 is a block diagram of the configuration of a receiver circuit according to the second embodiment of the present invention;

FIGS. 19A and 19B show the configuration of a transmitting signal, the received signal consisting of the direct and the delayed wave according to the second embodiment of the present invention;

FIG. 20 shows a received signal consisting of the signal from a desired station and an interference according to the second embodiment of the present invention;

FIG. 21 shows an example of the configuration of the extended sequences with dummy chips according to the second embodiment of the present invention;

FIGS. 22A and 22B show the characteristics of the interference direct component of the extended sequence shown in FIG. 21;

FIG. 23 is a block diagram of a frame reconstruction circuit (MSK) composing a part of the receiver according to the second embodiment of the present invention;

FIG. 24 is a block diagram of the configuration of a transmitter circuit according to the third embodiment of the present invention;

FIG. 25 is a block diagram of the configuration of a receiver circuit according to the third embodiment of the present invention;

FIG. 26 shows the configuration of a received frame according to the third embodiment of the present invention;

FIG. 27 shows frequency arrangement examples of the received baseband frames according to the third embodiment of the present invention;

FIGS. 28A and 28B show examples of multi-frame configuration used for the pilot frame transmission according to the third embodiment of the present invention;

FIG. 29 is a block diagram of an interference control signal detection circuit (CID) composing part of the receiver according to the third embodiment of the present invention;

FIG. 30 is a block diagram of a control signal gain calibration coefficient detection circuit (CAB) composing a part of the receiver according to the third embodiment of the present invention;

FIGS. 31A and 31B show a frame configuration used for an address spreading sequence/scramble sequence combined system according to the fourth embodiment of the present invention;

FIG. 32 is a block diagram of the configuration of a transmitter circuit according to the fourth embodiment of the present invention; and

FIG. 33 is a block diagram of the configuration of a receiver circuit according to the fourth embodiment of the present invention.

## Description of the preferred embodiments

The embodiments of the present invention are described in detail below by referring to the attached drawings.

〈First Embodiment〉

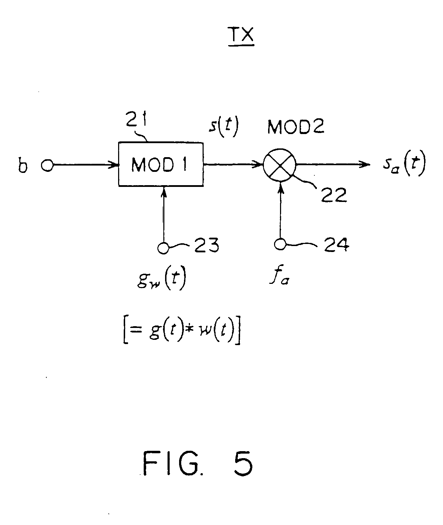

FIG. 5 is a block diagram of the configuration of the circuit of the transmitter according to the first embodiment of the present invention. The transmitter comprises a first modulator (MOD 1) 21; a second modulator (MOD 2) 22; a reference code sequence generator 23; and an oscillator 24. The b, s(t), $s_a$(t), $g_w$(t), $f_a$ shown in FIG. 5 respectively indicate binary transmission information, a baseband transmission wave, a radio frequency band transmission wave, a sampling function convoluted spreading sequence (reference signal wave), and a carrier wave. The first modulator (MOD 1) 21 shown in FIG. 5 generates a baseband signal s(t) by modulating the reference signal $g_w$(t) with the binary information b. To transmit the signal through a radio transmission path, the second modulator (MOD 2) 22 modulates the carrier wave $f_a$ with the baseband transmitting signal s(t) to generate a radio band signal $s_a$(t).

Denting the spreading sequence by g(i), it is represented with L chips as the following equation.

$$g(i) = \sum_{i=0}^{L-1} g_i \delta(t - iT_c) \tag{7}$$

To transmit an impulse signal without being subject to distortion via a band-limited channel, technology of associating each chip of the spreading sequence g(i) with a sampling function waveform w(t) is used. Therefore, the reference signal $g_w$(t) is a convolutinal output of the g(i) and w(t) as shown in the following equation.

$$g_w(t) = g(i) * w(t) = \sum_{i=0}^{L-1} g_i w(t - iT_c) \qquad [g_i \varepsilon \pm 1] \tag{8}$$

To limit the sampling function waveform to a finite time period, a smooth role off characteristic is given to its frequency characteristic. Assume that the characteristic is designed over the occupied transmission band width $f_c$ so that the most part of the vibrating waveform of the sampling function waveform w(t) may be contained in the time range (duration time $T_{cw}$ = 2T) of (-$LT_c$ - $LT_c$).

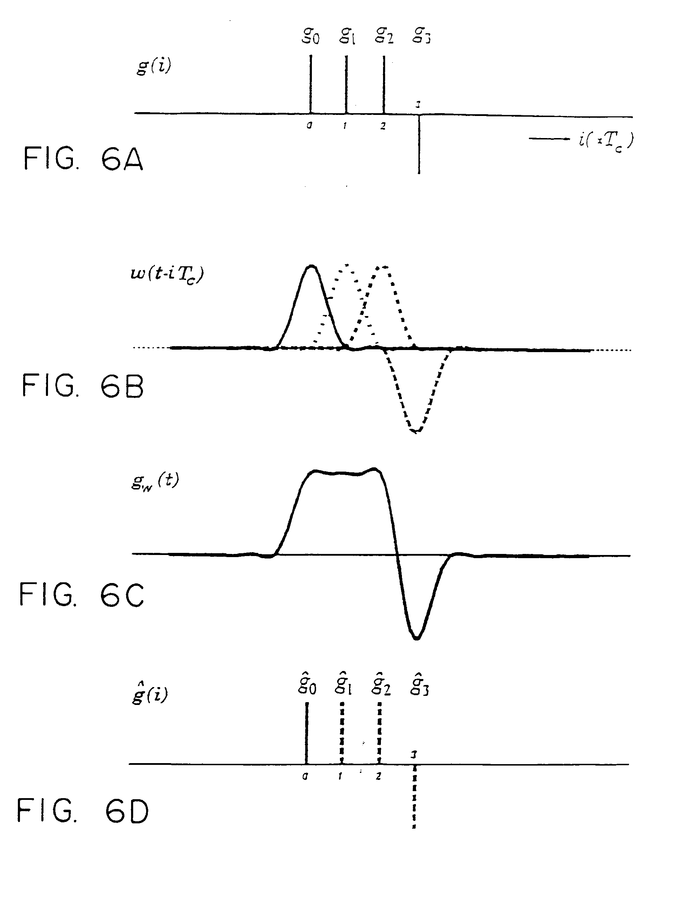

FIG. 6A shows a 4-chip g(i) (1 1 1 -1). FIG. 6C shows the reference signal wave generated by convoluting the above described sampling function w(t) [waveform indicated by the solid line shown in FIG. 6B] to each of the chips $g_i$.

In this case, since the reference spreading sequence is formed by four chips, the length of one frame (1-bit time width) T is obtained by $T = 4T_c$. With the extended width $T_{cw}$ of one chip, the extended width $T_{gw}$ of the reference wave $g_w(t)$ is obtained by $T_{gw} = T_{cw} + T = 3T$.

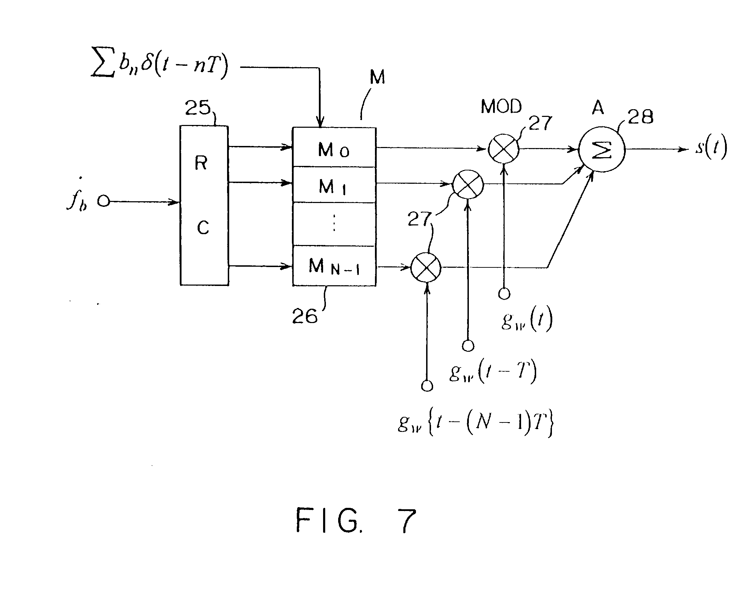

FIG. 7 is a block diagram of the practical configuration of the first modulator (MOD 1) 21 shown in FIG. 5. In FIG. 5, RC, M, MOD, and A respectively indicate a ring counter 25, memory 26, a multiplier 27, and adder 28. The $f_b$ indicates a bit clock pulse. In FIG. 7, the binary information $b_n$ is cyclically stored in the memory 26 at every T second. In this example, an N-dividing counter is used for the timing of $T_{gw}$ (=NT). The multiplier (MOD) 27 multiplies the information output $b_k$ of the k-th cell $M_k$ on the above described cyclic memory 26 by the reference signal wave $g_w$ (t - kT) which is delayed by kT seconds. The result and similar outputs are added by the adder (A) 28, thereby a baseband output s(t) is obtained.

Assuming that the transmitting wave s(t) and the received wave r(t) on the baseband are a sequence of the n-th transmitting/received symbol frame waveform, the following equations are derived.

$$s(t) = \sqrt{P} \sum_{n=-\infty}^{\infty} b_n g_w(t\text{-}nT) \tag{9}$$

$$r(t) = \sqrt{P'} \sum_{n=-\infty}^{\infty} b_n g_w(t\text{-}nT) + x(t) \tag{10}$$

where P, P' and x(t) are the transmitting power, the reception power, and noise contained in the received input respectively, and the delay time between the transmitting and received signals is omitted. For simplicity, it is assumed that P = P' = 1W. In addition, assuming that the type of distortion occurring in the transmission process is equalized by an equalizer so that s(t) may be equal to the signal component of the r(t), and the remaining distortion is contained in the x(t). The following is explained for the 0-th frame (n = 0).

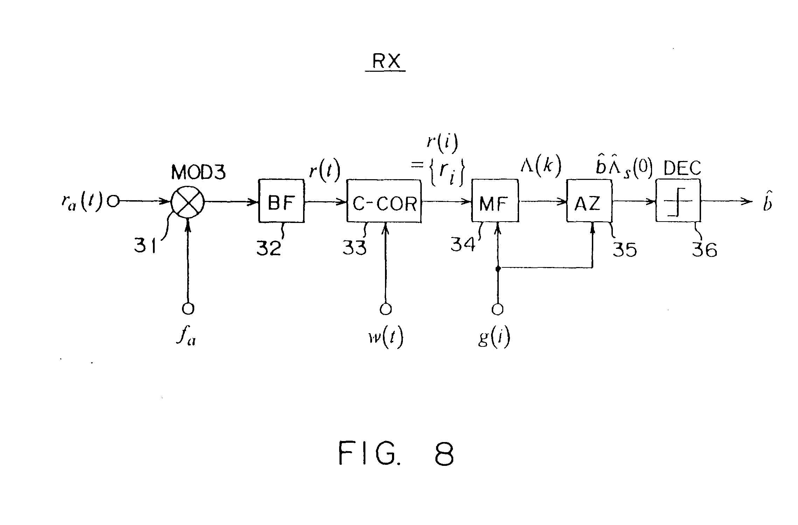

FIG. 8 is a block diagram of the configuration of the circuit of the receiver according to the first embodiment of the present invention. In FIG. 8, MOD 3, BF, C-COR, MF, AZ, DEC are respectively a multiplier 31, a band filter 32, a chip correlator 33, a matched filter 34, an analyzer 35, and a hard decision circuit 36. $r_a(t)$, $r(t)$, $r(i)$, $r_i$, $\Lambda(k)$, $\hat{b}\, \hat{\Lambda}_s(0)$, $\hat{b}$, $f_a$, w(t), and g(i) are respectively a received signal in the radio frequency band, a received baseband signal with continuous variable t (representation of one symbol frame in this example), a received frame signal with discrete variable i (= $iT_c$), the i-th chip amplitude of r(i), the MF output with k (=$kT_c$) shift, an estimated 0 shift output value based on the MF output, an estimated value of binary information transmitted, a local carrier wave, a modified sampling function, and a reference spreading sequence. The synchronizing circuit is omitted here.

Now let us describe below the operation of the receiver circuit shown in FIG. 8. The multiplier (MOD 3) 31 multiplies the radio band received signal $r_a(t)$ by the local carrier wave $f_a$. The output is band limited by the band filter (BF) 32. Thus, a received baseband signal r(t) is obtained. Then, the chip correlator (C-COR) 33 obtains the correlation value between r(t) and the i-chip-shifted sampling function w(t - $iT_c$) (refer to FIG. 6B) over such time interval $T_{cw}$ that the error can be ignored. The output is the i-th demodulated impulse $r_i$. This convolution is given by the following equation.

$$r_i = \frac{1}{T_{cw}} \int_{iT_c - T_{cw/2}}^{iT_c + T_{cw/2}} r(t) w^*(t\text{-}iT_c)\,dt \tag{11}$$

where * indicates the complex conjugate. Assuming that the 0-th frame impulse train (n=0) is expressed as r(i), the i-th chip $r_i$ also contains noise as represented by the following equation.

$$r_i = bg_i + x_i \tag{12}$$

$$g_i = \frac{1}{T_{cw}} \int_{iT_c - T_{cw/2}}^{iT + T_{cw/2}} g_w(t) w^*(t\text{-}iT_c)\,dt \tag{13}$$

$$x_i = \frac{1}{T_{cw}} \int_{iT_C - T_{cw/2}}^{iT_C + T_{cw/2}} x(t) w^*(T - iT_C) dt \tag{14}$$

where, to satisfy the Eq. (13), $w(t - iT_c)$ should be orthogonal to $w(t - i'T_c)$ ($i \neq i'$). To precisely satisfy the condition, the frequency characteristic of $w(t)$ should be modified sampling function with a cosine role off as expressed by the following equation. [reference: Noriyoshi Kuroyanagi, Naoki Suehiro, Kohei Ohtake, Mitsuhiro Tomita and Lili Guo, 'A narrowband Multi-array FSK Transmission Principle using Sampling Function Waveform Modulation,' IEEE 4th ISSS TA'96, TE4 (1996-09)]

$$w(t) = \frac{4\alpha\cos[\pi(1+\alpha)t/T_C] + \pi(1-\alpha)s_a[\pi(1-\alpha)t/T_C]}{\{4\alpha + \pi(1+\alpha)\}\{1 - (4\alpha t/T_C)^2\}} \tag{15}$$

$$S_a(x) = \sin x / x \tag{16}$$

FIG. 6C shows the transmitting reference signal with one frame $g_w(t)$. At the receiver, the estimated value of the i-th chip $\hat{g}_i$ can be detected by obtaining the cross-correlation between $g_w(t)$ and $w(t - iT_c)$ shown in FIG. 6B. The result is shown in FIG. 6D.

The chip correlator (C-COR) 33, which detects the above described correlation converts the continuous real time received input frame waveform $r(t)$ into a received frame $r(i)$ expressed by a discrete sequence. $r(i)$ is represented by the following equation.

$$\left. \begin{aligned} r(i) &= s(i) + x(i) = \sum_{i=0}^{L-1} r_i \delta(t - iT_C) \\ s(i) &= \sum_{i=0}^{L-1} b g_i \delta(t - iT_C) \\ x(i) &= \sum_{i=0}^{L-1} x_i \delta(t - iT_C) \end{aligned} \right\} \tag{17}$$

where $s(i)$ and $x(i)$ are impulse sequences of the signal components and noise components respectively, and represented as values of one symbol frame. Hereafter, the discrete value representation is used for representing a time waveform, and i is used as the time variable defined by the relationship of $t = iT_c$.

According to the present embodiment, a sequence whose auto-correlation function takes 0 except 0 shift. Only $g(i)$ (1 1 1 -1) is known as a two-phase orthogonal sequence, and can be actually used. However, since the chip length for general application is so small as $L = 4$, thereby it is impossible to get a large spreading gain. On the other hand, a number of four-phase orthogonal sequences where $L > 4$ exist. To realize the four-phase orthogonal sequence actually by two-phase impulse sequences, let us consider a system where, for example, the transmitter transmits complementary sequences $\alpha(i)$ and $\beta(i)$ (periodic sequences with period L) of L chips in length, and then the receiver obtains the correlation outputs for both the sequences frame by frame, and then adds both the outputs. The reference spreading sequence is expressed as follows.

$$g(i) = \alpha(i) + \beta(i-L) \tag{18}$$

$$\alpha(i) = \sum_{i=0}^{L-1} \alpha_i \delta(t - iT_C) \tag{19}$$

$$\beta(i) = \sum_{i=0}^{L-1} \beta_i \delta(t - iT_C) \tag{20}$$

where each of $\alpha(i)$ as well as $\beta(i)$ consists of L chips, g(i) consists of 2L chips, $\beta(i)$ is assumed to be such a periodic sequence as $\beta_i = \beta_{i+L}$. Therefore, the frame length of the transmitting signal s(i) and the received signal r(i) is 2L.

When the auto-correlation functions of $\alpha(i)$, $\beta(i)$ $Rumuba_{alfa}(k)$, $\Lambda\alpha(k)$ and $\Lambda\beta(k)$ are represented using the discrete variable k instead of the continuous shift time $\tau$ ($\tau = kT_c$), the whole auto-correlation function $\Lambda_s(k)$ can be represented by the following equation (* indicates the complex conjugate).

$$\Lambda_s(k) = \Lambda_\alpha(k) + \Lambda_\beta(k) \tag{21}$$

$$\Lambda_\alpha(k) = \frac{1}{L} \sum_{i=0}^{L-1} \alpha_i \alpha_{i+k}^* \tag{22}$$

$$\Lambda_\beta(k) = \frac{1}{L} \sum_{i=0}^{L-1} \beta_i \beta_{i+k}^* \tag{23}$$

where $\alpha(i)$ and $\beta(i)$ are called complementary sequences when the following equation is satisfied except at zero shift and all the integer times of L shift.

$$\Lambda_s(k) = 0 \qquad (k \neq 0, \pm L, \pm 2L, \cdots) \tag{24}$$

$\alpha(i)$ and $\beta(i)$ are constitutes a four-phase orthogonal sequence, and they are made of an even shift orthogonal sequence (E) whose auto-correlation at the even shift takes 0.

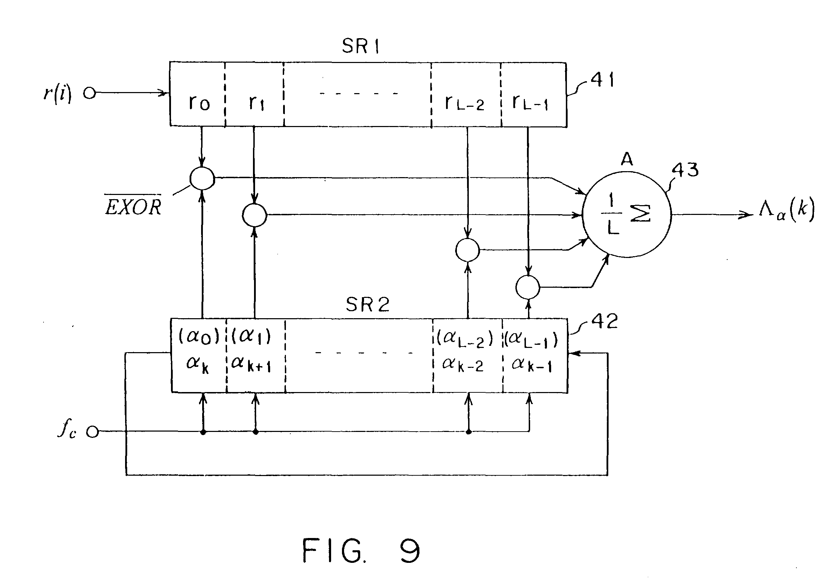

FIG. 9 is a block diagram of the configuration of the matched filter (MF) 34. SR1, SR2, $f_c$, $\Lambda\alpha(k)$, and A are respectively a received input shift register 41, a reference spreading sequence shift register 42, a chip clock pulse, a cross-correlation function (output), and an adder 43. The leading half portion of the received frame impulse train, corresponding to the $\alpha(i)$, consists of L impulses, r(i) = [$r_i$], arranged at chip intervals, and initially stored at respective cells of the received input shift register (SR1) 41. On the other hand, the reference spreading sequence consists of L binary chips ($a_0$, $a_1$, ..., $\alpha_{L-1}$) to be initially stored in each cell of the reference spreading sequence shift register (SR 2) 42. When a chip clock pulse is added at every $T_c$-th second, the contents of the reference spreading sequence shift register (SR 2) 42 are cyclically shifted one chip to the left. If the k-th clock has arrived, the contents of the reference spreading sequence shift register (SR 2) 42 are set to ($\alpha_k$, $\alpha_{k+1}$, ..., $\alpha_{k-1}$), the output $\Lambda\alpha(k)$ is obtained by adding the EX-OR product of the contents stored in the cells $r_i$ and $\alpha_{i+k}$ with respect to i. The similar product $\Lambda\beta(k)$ is obtained from the second half portion of the received frame impulse train, corresponding to $\beta(i)$ and $\beta(i)$, and all these results are added by the adder (A) 43. Thereby the cross-correlation function with shift variable $\tau = kT_c$ by the following equation.

$$\Lambda_R(k) = b\Lambda_s(k) + \Lambda_x(k) \qquad (0 \leq k \leq L-1) \tag{25}$$

$$\Lambda_s(k) = \frac{1}{L} \left[ \sum_{i=0}^{L-1} \alpha_i \cdot \alpha_{i+k}^* + \sum_{i=L}^{2L-1} \beta_i \cdot \beta_{i+k}^* \right] \tag{26}$$

$$\Lambda_s(k) = \sum_{m=0}^{L-1} \lambda_m \delta(k-m) \tag{27}$$

$$\Lambda_x(k) = \frac{1}{L} \left[ \sum_{i=0}^{L-1} x_i \cdot \alpha_{i+k}^* + \sum_{i=L}^{2L-1} x_i \cdot \beta_{i+k}^* \right] \tag{28}$$

$$\Lambda_x(k) = \sum_{m=0}^{L-1} \zeta_m \delta(k-m) \tag{29}$$

where $\Lambda_s(k)$, and $\Lambda_x(k)$ indicate the correlation functions of a signal component and a noise component respectively.

According to the present embodiment, a matched filter output $\Lambda(k)$, which is a cross-correlation function, is analyzed, and the analyzed result is used for the signal detection. The zero shift correlation output $\Lambda_R(0)$ consisting of the noise component and the signal component in the following equation contained in a received input are normally used for signal detection.

$$\Lambda_R(0) = b\Lambda_S(0) + \Lambda_x(0) \tag{30}$$

$$\Lambda_x(0) = \zeta_0 \tag{31}$$

In the hard decision circuit (DEC) 36 shown in FIG. 8, $\hat{\Lambda}_x(0) = \hat{\zeta}_0$ is not estimated by the $\Lambda(0)$ itself, but in the method described later, it is determined whether b in the Eq. (12) is positive or negative using the estimated value $\hat{\Lambda}_R(0)$ obtained by the following estimation, as a result, the estimated value $\hat{b}$ is obtained. According to the present embodiment, the noise correlation value $\Lambda_x(0) = \zeta_0$ is estimated.

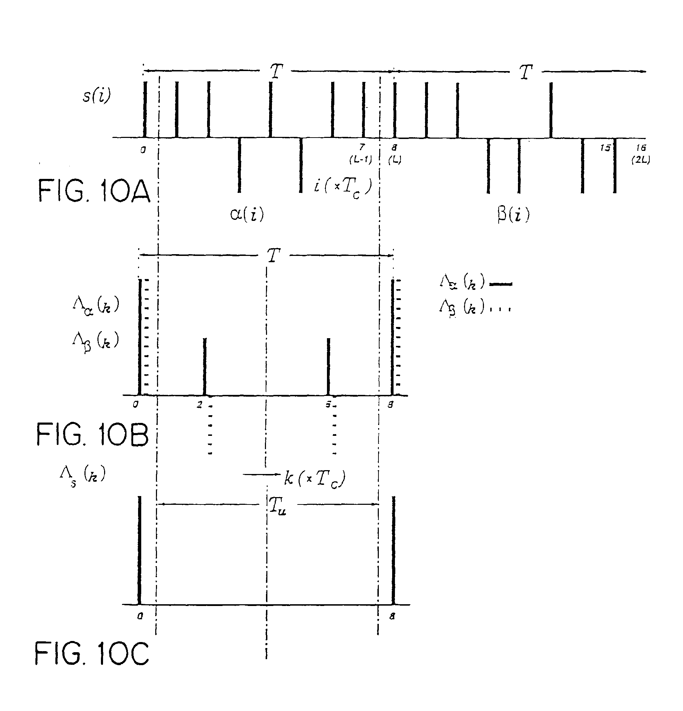

FIG. 10A shows an example of a spreading complementary code sequence used in the present embodiment in which L = 8 [α(i): 111-11-111, β(i): 111-1-11-1-1]. As clearly shown in FIGS. 10B and 10C, the auto-correlation function $\Lambda\alpha(k)$ and $\Lambda\beta(k)$ cancel each other for any value other than k = 0. Therefore, it is equivalent to transmitting an orthogonal sequence when considering the demodulating process at the receiver.

A transmitting signal is made by polarity of g(i) non-inverting or inverting the corresponding to the binary information b (1, -1). Assume that the received input r(i) contains only the signal component bg(i). As previously described with FIGS. 8 and 9, the cross-correlation function of the leading portion of the received frame and α(i) is obtained, and the cross-correlation function of the trailing portion of the received frame and β(i) is obtained. Adding up these results is the demodulating process, and the output is the auto-correlation function, where the Eq. (24) is satisfied. However, if the noise x(i) is contained in the r(i), Eq. (24) does not hold good.

Let us consider such noise as not containing a direct current component.

$$x_{DC}\alpha = \frac{1}{L}\sum_{i=0}^{L-1} x_i = 0 \tag{32}$$

$$x_{DC}\beta = \frac{1}{L}\sum_{i=L}^{2L-1} x_i = 0 \tag{33}$$

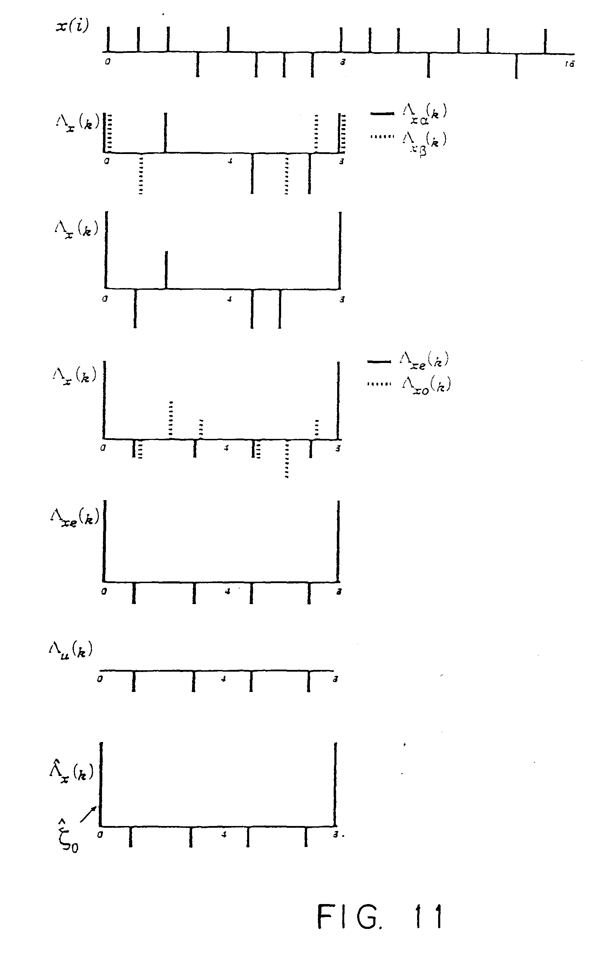

FIG. 11 shows an example of the above described noise x(i) [i = 0 through (2L - 1)] and the cross-correlation function where r(i) does not contain a signal, but contains only the above described noise.

Let us call the region of k = 0, (±L, ±2L, ...) in the shift time k, a (signal) correlated region $T_{co}$, and k = 1 through (L - 1) a (signal) uncorrelated region $T_u$. Even when a received frame r(i) contains a signal s(i), the partial cross-correlation function in the period $T_u$ is the noise-dependent function $\Lambda_u(k)$. Assuming that the correlation function of all the regions for a signal and noise is $\Lambda(k)$, $\Lambda_u(k)$ is represented as,

$$\Lambda_R(k) = \sum_{k=0}^{L-1} \lambda_k \delta(\tau - kT_c) \tag{34}$$

$$\Lambda_u(k) = \sum_{k=0}^{L-1} \lambda_k \delta(\tau - kT_c) = \Lambda_{ux}(k) \tag{35}$$

In FIG. 11, since s(i) = 0 , $\Lambda(k) = \Lambda_x(k)$ . According to the present embodiment, $\Lambda_x(k)$ and the noise correlation

value $\Lambda_x(0) = \zeta_0$ in Eq. (31) are estimated from $\Lambda_u(k)$.

The principle of estimating $\Lambda_x(k)$ is described below by referring to an example where the output of the matched filter (MF) is a continuous waveform $\Lambda(\tau)$.

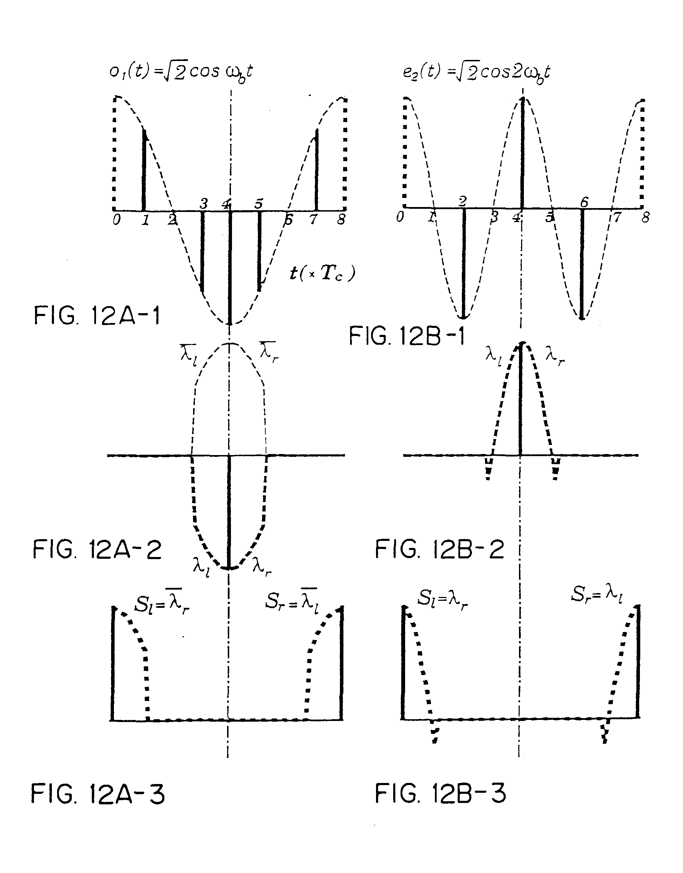

FIGS. 12A-1 through 12B-3 show the illustration to explain waveform analysis based on the partial substitution waveform compensation. The noise-dependent function $\Lambda_x(\tau)$ in $\Lambda(\tau)$ is assumed to be the periodic waveform with period T. Let us analyz it with DFT (discrete Fourier transform) to obtain each frequency component.

The component relating to $\Lambda_x(0) = \zeta_0$ is only the real function (cosine wave) component $\Lambda_{xe}(\tau)$ in the above described frequency components. Then, an operation of removing the odd function (sine wave) component $\Lambda_{x0}(\tau)$ from $\Lambda_x(\tau)$ is performed, and the result is given by,

$$\Lambda_x(\tau) = \Lambda_{xe}(\tau) + \Lambda_{x0}(\tau) \tag{36}$$

$$\Lambda_{xe}(k) = \{\Lambda_x(\tau) + \Lambda_x(-\tau)\}/2 \tag{37}$$

For simplicity, it is assumed that the direct current component is not first contained in $\Lambda_x(\tau)$. Then, $\Lambda_{xe}(\tau)$ is represented by an even function component without direct current component, further divided into two components, that is, an even multiple harmonic element function group and an odd multiple harmonic element function group, as represented by,

$$\Lambda_{xe}(\tau) = \Lambda_{xee}(\tau) + \Lambda_{xe0}(\tau) \tag{38}$$

where $\omega_b = 2\pi/T$, $T = LT_c$. Setting p = 1, 2 for

$$\Lambda_{xee}(\tau) = \sum_{p=0}^{L-1} \xi_p cosp\omega_b\tau \qquad (p\text{:}even) \tag{39}$$

$$\Lambda_{xeO}(\tau) = \sum_{p=1}^{L-1} \xi_p cosp\omega_b\tau \qquad (p\text{:}odd) \tag{40}$$

simplicity, the following two element functions with unit power are considered.

$$O_1(\tau) = \sqrt{2} \cos\omega_b\tau \tag{41}$$

$$e_2(\tau) = \sqrt{2} \, cos2\omega_b\tau \tag{42}$$

FIGS. 12A-1 and 12B-1 show continuous waveforms of $O_1(\tau)$ and $e_2(\tau)$ respectively by the dotted lines. The k-th sampling point value on the uncorrelated region is indicated by a real line, and the value on the correlated region is indicated by a dotted line. Assume that the unit center portions (having band width $f_b$ = T-1 indicated by the bold line) $\lambda_1$ and $\lambda_r$ to the left and right from the center of the element function (uncorrelated region) shown in FIG. 12A-2 or 12B-2 are inserted as substitute waveforms for the waveforms $S_r$ and $S_1$ respectively on the rightmost and leftmost portions of the correlated region shown in FIG. 12A-3 or 12B-3.

That is, the entire waveform $O_1(\tau)$ shown in FIG. 12A-1 is reconstructed [ $\overline{\lambda}_l$ to be copied (shown in FIG. 12A-2) agrees with the waveform indicated by the dotted lines in the correlated region shown in FIG. 12A-1] when the polarity of the partial waveform in the uncorrelated region is inverted and copied to the position shown in FIG. 12A-3 based on the following correspondence.

$$P_o:\begin{Bmatrix} \overline{\lambda}_r \rightarrow S_r \\ \overline{\lambda}_r \rightarrow S_l \end{Bmatrix} \rightarrow \Lambda_l(\tau)$$

The waveform generated from $\Lambda_u(\tau)$ with the processing of waveform inversion and copying, is named an I type pseudo-element function $\Lambda_l(\tau)$. The reconstructing method can also be applied to the element function of another odd multiple harmonic wave.

Then, the similar method is applied to the element function $e_2(\tau)$ shown in FIG. 12B-1. However, in this case, the unit center portion shown in FIG. 12B-2 should be copied as non-inverted. That is, the entire waveform of $e_2(\tau)$ can be reconstructed based on the following correspondence.

$$P_e : \begin{Bmatrix} \bar{\lambda}_r \rightarrow S_r \\ \bar{\lambda}_r \rightarrow S_l \end{Bmatrix} \rightarrow \Lambda_N(\tau)$$

The waveform generated from $\Lambda_u(\tau)$ with this processing of waveform non-inversion and copying, is named an N type pseudo-element function $\Lambda_N(\tau)$. The reconstructing method can also be applied to another even multiple harmonic waves.

As described above, the correlation function $\Lambda_u(\tau)$ in an uncorrelated region [having the same continuous waveform as Eq. (35)] should be analyzed after applying two types (processing of waveform inversion-copying and non-inversion-copying) of waveform transform processing. However, when an inversion processsing is applied to odd (even) multiple harmonic waves, the original elements cannot be reconstructed for the even (odd) multiple harmonic waves, but distorted waveform elements [represented as $\tilde{o}_1(\tau)$, $\tilde{e}_2(\tau)$] are generated. However, the influence of the distorted waveform elements can be represented by the following L-variable linear simultaneous equations by the cross-correlation coefficients between the element functions.

$$[U][X] = [Z] \tag{43}$$

$$\begin{bmatrix} u_{11} & u_{12} & \cdots & u_{1j} & \cdots & u_{1,L-1} \\ u_{21} & u_{22} & \cdots & u_{2j} & \cdots & u_{2,L-1} \\ \vdots & \vdots & & \vdots & & \vdots \\ u_{p1} & u_{p2} & \cdots & u_{pj} & \cdots & u_{p,L-1} \\ \vdots & \vdots & & \vdots & & \vdots \\ u_{L-1,1} & u_{L-1,2} & \cdots & u_{L-1,j} & \cdots & u_{L-1,L-1} \end{bmatrix} \begin{bmatrix} \xi_1 \\ \xi_2 \\ \vdots \\ \xi_p \\ \vdots \\ \xi_{L-1} \end{bmatrix} = \begin{bmatrix} z_1 \\ z_2 \\ \vdots \\ z_p \\ \vdots \\ z_{L-1} \end{bmatrix} \tag{44}$$

$$\left. \begin{aligned} u_{pj} &= \frac{1}{T}\int \tilde{e}_j(\tau) O_p^*(\tau) d\tau && [p:odd, j:even] \\ u_{pj} &= 0 && [p, j, even] \\ u_{pj} &= \frac{1}{T}\int \tilde{O}_j(\tau) e_p^*(\tau) d\tau && [p:even, j:odd] \\ u_{pj} &= 0 && [p, j:even \ or \ odd, p \neq j] \\ u_{pj} &= \frac{1}{T}\int \tilde{O}_j(\tau) O_p^*(\tau) d\tau = \frac{1}{T}\int \tilde{e}_j(t) e_p^*(t) dt = 1 \\ & \qquad\qquad (p, j \in 1, 2 \cdots L-1) \end{aligned} \right\} \tag{45}$$

$$\left. \begin{aligned} z_p &= \frac{1}{T}\int_0^T [\Lambda_L(\tau)] o_p^*(\tau) d\tau && [p:odd] \\ z_p &= \frac{1}{T}\int_0^T [\Lambda_N(\tau)] e_p^*(\tau) d\tau && [p:even] \\ & \qquad\qquad (p, j \in 1, 2 \cdots L-1) \end{aligned} \right\} \tag{46}$$

where $\Lambda_I(\tau)$ and $\Lambda_N(\tau)$ are the functions obtained by applying the processing of inversion / non-inversion-copying $(P_o, P_e)$ to the cross-correlation function $\Lambda(\tau)$ between a reference signal and a received frame r(t). * denotes complex conjugate. In addition, $\xi_p$ is an unknown number, and can be obtained by solving Eq. 43. An estimated value of $\Lambda_x(\tau)$ is represented by the following equation using $\xi_p$.

$$\hat{\Lambda}_x(\tau) = \sum_{p=1}^{L-1} \xi_p cos p\omega_b\tau \tag{47}$$

When a spreading sequence g(i) is transmitted using a rectangular wave through a band limited transmission path, the rectangular wave gets a large distortion. Therefore, a partial wave on the uncorrelated region of the cross-correlation function $\Lambda_s(\tau)$ obtained in the demodulating process performed at the receiver on the signal component is represented by the following equation.

$$\Lambda_s(\tau / T_u) \neq 0 \qquad T_C < \tau < LT_C \tag{48}$$

Thus, the above described principle cannot be applied. However, when the above described amended sampling function modulation is used, the impulse component of a reference spreading sequence used at the transmitter can be exactly restored at the receiver. In addition, in Eqs. (38) through (47), $\tau$ (=$kT_c$) can be replaced with a discrete value k, and the T can be replaced with L. In this case, the Eq. (24) hold good when the band is limited. Additionally, as indicated by the solid line shown in FIGS. 12A-1 and 12B-1, each element function is composed of an impulse sequence with L sampled values in the continuous waveform. Since cross-correlation functions with a similar L-point period are analyzed using element functions with L-point period, the information quantity can be reduced as compared with the case of the continuous waveforms. As a result, the size of the matrix U is (L/2 x L/2). Taking an even number for $L_s$, it is easy to implement the partial substitution waveform. Complementing the case of L = 8, is achieved by the impulse sequence shown in FIG. 12A-1 or 12B-1. Equation (45) is obtained using the impulse sequences generated based on the sampled values at eight points of each of the waveforms $O_p(\tau)$(p=1, 3), $e_p(\tau)$ (p=2, 4). Based on the result U in the Eq. (43) is given by,

$$[U] = \begin{pmatrix} +1.0 & -0.5 & -0.0 & -0.5 \\ -0.5 & +1.0 & -0.5 & +0.0 \\ +0.0 & -0.5 & +1.0 & -0.5 \\ -0.5 & +0.0 & -0.5 & +2.0 \end{pmatrix} \tag{49}$$

FIG. 11 shows an example of L = 8, and the correlation functions $\Lambda_x\alpha(k)$ and $\Lambda_x\beta(k)$ between the leading half and trailing half of the noise input x(i) containing no direct current components, and $\alpha(i)$, and $\beta(i)$ are, respectively, obtained. The sum $\Lambda_x(k)$ of the functions [in this case, $\Lambda_R(k)$ because s(i) = 0] is displayed after being separated into $\Lambda_{x0}(k)$ and $\Lambda_{xe}(k)$ by the method of the Eq. (36). $[\xi_p]$ is obtained by the Eqs. (49), (46), and (44) from the even function waveform $\Lambda_u(k)$ of region $T_u$ of the $\Lambda_{xe}(k)$, as follows.

$$\hat{\Lambda}_x(k) = \sum_{p=1}^{L-1} \xi_p C_p(k) \tag{50}$$

$$C_p(k) = \cos(2\pi pk / L) \tag{51}$$

where $C_p(k)$ represents the discrete expression of the element function cos $p\omega_b \tau$. The zero shift estimated value $\hat{\Lambda}_x(0) = \hat{\zeta}_0$ can be obtained from the equations above. If the received frame r(i) contains a signal component g(i), $\Lambda_s(0)$ is obtained, but this does not affect the computation of the $\hat{\Lambda}_x(k)$ . Therefore, by Eq. (25), the estimated correlation value $\hat{b} \hat{\Lambda}_s(0)$ at zero shift can be obtained for the reference spreading sequence component contained in the received frame impulse train using the relationship represented by the following equation.

$$\hat{b}\hat{\Lambda}_s(0) = \Lambda_R(0) - \hat{\Lambda}_x(0) \tag{52}$$

The estimated value $\hat{b}$ of a binary transmitted information can be obtained by the hard decision circuit (DEC) 36 shown in FIG. 8.

In the above description, it is assumed that no direct current component is contained in x(i) in Eq. (17) contained in the recepived frame r(i). If x(i) contains a direct current component $x_{DC}$, since g(i) itself contains a direct current component $g_{DC}$. The cross-correlation function $\Lambda_x(k)$ between x(i) and g(i) also contains the direct current component $\xi_0$. On the other hand, since [U] in Eqs. (43) and (49) does not contain the elements corresponding to direct current components, it cannot estimate the direct current component, and the estimated value $\hat{\Lambda}_x(k)$ is given by the following equation.

$$\hat{\Lambda}_x(k) = \Lambda_{x4c}(k) = \Lambda_x(k) - L\xi_0 \tag{53}$$

$$\xi_0 = \frac{1}{L}\sum_{k=1}^{L-1}\Lambda_x(k) \tag{54}$$

where an error of $-L\xi_0$ is generated, and $\Lambda_{xAc}(k)$ is an alternate current component contained in $\Lambda_x(k)$.

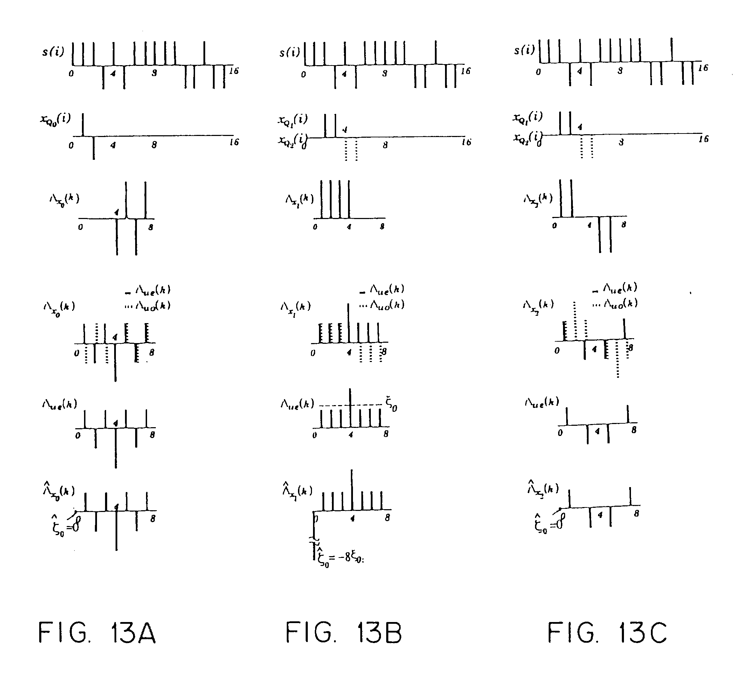

Now, consider noise $x_Q(i)$ which is orthogonal to the reference spreading sequence g(i). There are, in $x_Q(i)$, noise $x_{Q0}$ such as not containing direct current component $x_{DC}$ as shown in FIG. 13A, and the noise $x_{Q1}(i)$ such as containing direct current component $x_{DC}$ as shown in FIG. 13B [since both the noise takes 0 at the latter half portion of the frame, the orthogonal condition of $\Sigma\alpha_i x_{Q0i} = \Sigma\alpha_i xQ_{1i} = 0$ is satisfied]. The above described estimating method for the noise containing no direct current components can be applied to FIG. 13A. That is, the even function component $\Lambda_{x0e}(k)$ of $\Lambda_{x0}(k)$ is first obtained, and $\hat{\Lambda}_{x0}(k)$ can be estimated from $\Lambda_{ue}(k)$ shown in FIG. 13A which is a partial correlation function on $T_u$. Since $x_{Q0}(i)$ is an orthogonal noise, the following correct estimated value can be obtained.

$$\hat{\Lambda}_x(0) = \hat{\xi}_0 = 0$$

Although, $\Lambda_{x1}(k)$, $\Lambda_{x1e}(k)$ can be similarly obtained for the case shown in FIG. 13B, the direct current component $x_{DC}$ of the noise of the leading half frame and the direct current component $\alpha_{DC}$ of the complementary sequence $\alpha(i)$ produces the direct current components $\xi_0$ shown in FIG. 13B in the partial correlation function $\Lambda_{ue}(k)$ on $T_u$ obtained from $\Lambda_{x1e}(k)$. When $\hat{\Lambda}_{x1}(k)$ is estimated from the sequence, the zero shift value can be computed as follows.

$$\hat{\lambda}_0 = -L\xi_0$$

Therefore an error of $-L\xi_0$ is generated contrary to the assumption of an orthogonal noise. Then, the additional noise $\Delta x_{Q1}$ indicated by the dotted line shown in FIG. 13B is added to $x_{Q1}(i)$. If the above described orthogonal condition, the composite noise should be orthogonal noise. In addition, since the direct current components of $x_{Q1}(i)$ and $\Delta x_{Q1}$ cancel each other, the composite noise becomes an alternating current noise, and has the same characteristic as $x_{Q0}(i)$. Therefore, the result indicated by the dotted line is obtained with the estimating process (shown in FIG. 13C) performed for the composite noise, and the correct result

$$\hat{\zeta}_0 = 0$$

is derived. By selecting an additional noise to any input noise, making it orthogonal and alternate can be simultaneously achieved. As a result, the above described characteristic can be used to avoid the generation of the error $-L\xi_0$.

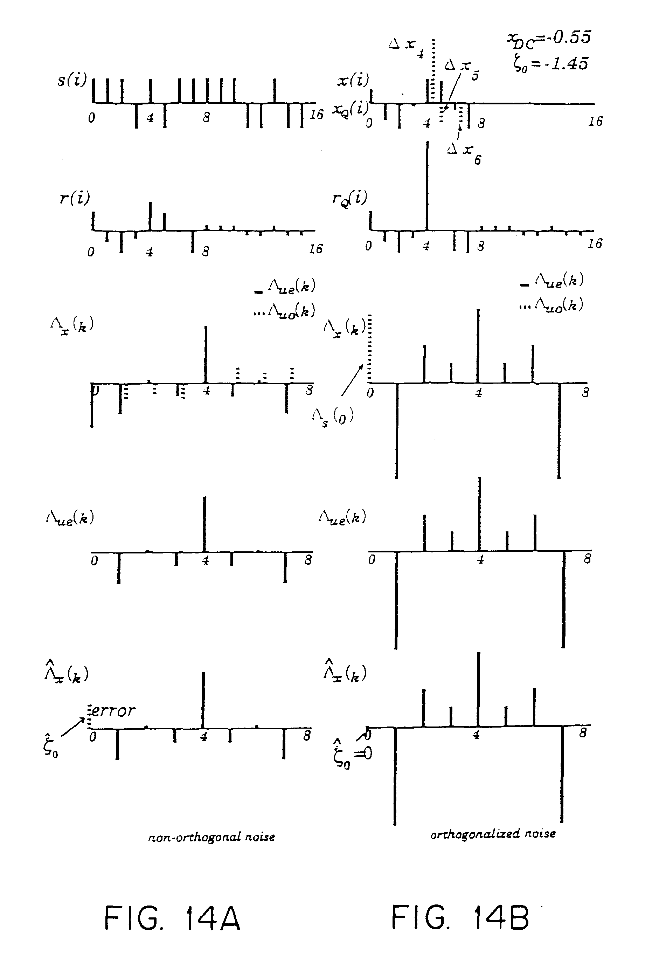

Now, for the received frame r(i) given by Eq. (17) containing the signal component and general noise as shown in FIG. 14A, the additional noise $\Delta x(i)$ is added to the contained noise x(i) to adjust the $\Delta x(i)$ into $\Delta x(i) \rightarrow \Delta\hat{x}(i)$. Consider to produce such a received frame impulse train $\hat{r}(i)$ that the entire noise may be the orthogonal noise $x_Q(i)$ of the following equation, and the alternate current noise.

$$\hat{r} = bg(i) + x(i) + \Delta\hat{x}(i) \tag{55}$$

$$x_Q(i) = x(i) + \Delta x(i) \tag{56}$$

$$x_{DC} = \frac{1}{L}\sum_{i=0}^{L-1} x_Q(i) = 0 \tag{57}$$

In the example, since $\beta(i)$ has no alternate current component is 0, the direct current component of the noise in to the trailing half frame is not necessarily included in the condition. $x_{DC}$ is given by Eq. (32). The cross-correlation function $\Lambda_R(k)$ is obtained from g(i) and r(i), only the even function component of $\Lambda_R(k)$ is extracted [since the direct current component of the odd function component of $\Lambda_R(k)$ is 0, the process of extracting an even function can be omitted], the direct current component $\xi_0$ of the partial correlation function $\Lambda_{ue}(k)$ on the uncorrelated region is detected, and $\Delta x(i)$ is adjusted so that the following equation may be satisfied.

$$\xi_0 \to 0 \qquad [\Delta x(i) - \Delta \hat{x}(i)] \tag{58}$$

Thus an to obtain an additional noise impulse train $\Delta \hat{x}(i)$ is obtained to satisfy $\xi_0=0$.

According to the above described theory, when $\xi_0=0$ is satisfied, the composite noise can be orthogonalized, and takes no direct current component. Therefore, Eqs. (56) and (57) can be satisfied. $\Lambda_R(k)$ is obtained from g(i) and the adjusted received frame $\hat{r}(i)$ with added noise $\Delta \hat{x}(i)$, and the estimated value $\hat{\Lambda}_x(k)$ is obtained using Eqs. (43) through (47), and (49) from $\Lambda_{ue}(k)$. Since $x_Q(i)$ should be orthogonal noise and alternate current noise, the following equation can be understood based on the above described theory.

$$\hat{\Lambda}_x(0) = \zeta_0 = 0 \tag{59}$$

The result is confirmed also by the simulation.

FIG. 14A shows the process using the above described method for a non-orthogonalized noise x(i) [the direct current component and the zero shift correlation are assumed to be $x_{DC}=00.55$ and $\zeta_0=-1.45$ as shown in FIG. 14A]. Since x(i) contains a direct current component, $\hat{\zeta}_0$ does not equal the zero shift correlation between g(i) and x(i). For simplicity, the fourth to sixth additional chip noises $\Delta \hat{x}_4$ through $\Delta \hat{x}_6$ are used as an example of the additional noise in Eq. (55), and an adjusted received frame is generated. FIG. 14B shows the process. Since the direct current component of $\Lambda_{ue}(k)$ becomes 0 ($\xi_0=0$) by adding the noise, the composite noise $x_Q(i)$ is transformed to an alternate current. Since the estimated value obtained from $\Lambda_{ue}(k)$ is $\hat{\zeta}_0=0$, the noise is orthogonalized. Therefore, if the cross-correlation function $\hat{\Lambda}_R(k)$ between the reference spreading sequence g(i) and the adjusted reception frame $\hat{r}(i)$ is obtained, then the zero shift cross-correlation value which is $x_Q(i)$ dependent correlation is computed by Eq. (59), the following equation is obtained by Eq. (52).

$$\hat{\Lambda}_s(0) = \Lambda_f(0) \tag{60}$$

This is the value indicated by the dotted line shown in FIG. 14B, and the estimated correlation $\hat{b}\,\hat{\Lambda}_s(0)$ for the signal component bg(i) in Eq. (55). FIG. 14B shows the waveform obtained in the above described process.

The above described additional noise $\Delta x(i)$ has the function of simultaneously setting to 0 the direct current component $x_{DC0}$ the original noise x(i) has and the zero shift cross correlation $\zeta_0$ between g(i) and x(i). Therefore, this an object can be achieved with at least two additional noise chips. Assuming that the positions of additional chips are j and j', [j, j' < L], the additional noise $\Delta x(i)$ can be obtained by solving the following simultaneous equations with two variables if $x_{DC0}$ and $\zeta_0$ are known.

$$\left.\begin{array}{l} \Delta \hat{x}_j + \Delta \hat{x}_{j\prime} = -x_{DC0} \\ \alpha_j \Delta \hat{x}_j + \alpha_{j\prime} \Delta \hat{x}_{j\prime} = -\zeta_0 \end{array}\right\} \tag{61}$$

If $\alpha_j \cdot \alpha_{j\prime} < 0$, the solution exists, and combination of $\Delta \hat{x}(i)$ can be easily obtained by selecting two chip positions having different signal polarities and changing $\Delta x_j$ and $\Delta x_{j\prime}$. Practically, two or more chips can be used to solve this problem.

In the explanation above, the complementary sequences $\alpha(i)$ and $\beta(i)$ are transmitted with two binary frames. In CDMA communications systems, a transmitting signal is often made of four-phase or poli-phase PSK signal. For example, when a transmitting signal is generated by a four-phase PSK signal, a reference signal wave is represented by the following equation comprising a four-phase L chips to replace the Eq. (1).

$$g(i) = \sum_{i=0}^{L-1} c_i \delta(t - iT_c) \qquad (0 \le i \le L - 1) \left.\vphantom{\sum_{i=0}^{L-1}}\right\} \qquad (62)$$
$$c_i = \alpha_i + j\beta_i$$

That is, in this case, g(i) in Eq. (1) is transformed into a complex number, and the j-th amended sampling function waveform $c_j$ w(t - $jT_c$) in numbers (±1) and imaginary numbers (±j) with a convolutional multiplication, and corresponds to a sampling function of one of the four-phase waves with frequency $f_a$, when a carrier wave is modulated at the final stage.

At the receiver, the complex value $c_i$ in Eq. (62) is obtained by correlation-detecting a received frame with a complex phase amended sampling function. Then transforming $c_i$ into $\alpha_i$ and $\beta_i$, the above described noise estimating technology can be applied to them. The technology can also be similarly applied to a poli-phase signal.

〈 Second Embodiment 〉

According to the above described first embodiment of the present invention, the transmitter generates a transmitting wave using an orthogonal sequence as a spreading code sequence. The receiver obtains a correlation function output by applying a received frame to a matched filter, and estimates and remove the direct current noise component included in the received frame using an integral value of the correlation except the zero shift. This method cannot sufficiently avoid the influence of the direct current noise component.

The orthogonal sequence generally contains a direct current component. Therefore, when an address spreading sequence having a direct current component is used for CDMA communications systems, a large amount of direct current component might be contained in the interference noise from other users, thereby it may be difficult to sufficiently reduce the error rate. The second embodiment of the present invention has been designed so that the error rate can be further reduced even if there is such a large interference noise.

Let us described first is the principle of the demodulation according to the present embodiment.

In the present embodiment, an orthogonal sequence whose periodic auto-correlation takes 0 at the zero shift, or a biased orthogonal sequence whose auto-correlation function takes positive for the integral value except the zero shift is used as an address spreading sequence to identify a user. The demodulation principle is explained for a binary sequence g(t) as an example of an orthogonal sequence.

g(t) consists of a pair of binary sequences $\alpha(t)$ and $\beta(t)$. They are transmitted after modulating them with an information b, sequentially, or simultaneously with four-phase modulation where $\alpha(t)$ corresponds to a real number and $\beta(t)$ corresponds to an imaginary number. In this example, the former is explained as an example. Generally, assuming that each of the spreading sequences $\alpha(t)$ and $\beta(t)$ consists of L chips, and has the chip cycle $T_c$, resulting in the sequence length T(=$LT_c$), the address spreading sequence g(i) is represented by the Eqs. (18) through (20) using a discrete time variable i (t=$iT_c$). The i-th chip amplitude of $\alpha_i$ and $\beta_i$ takes ±1. A transmitting signal sequence (transmission frame) s(i) is made by modulating g(i) by binary information b (ε±1).

Assume that the noise sequence added in the transmission process of transmitting the signal to the receiver is denoted by x(i). The received input r(i) is given by Eq. (17) with s(i) and x(i). With q(t) in Eq. (4) as a chip waveform, the address spreading sequence waveform g(t) is given by the following equation.

$$g(t) = \sum_{i=0}^{L-1} \alpha_i q(t - iT_c) + \sum_{i=L}^{2L-1} \beta_i q(t - iT_c) \qquad (63)$$

Using g(t), the transmitting wave s(t) and the received wave r(t) on the base band, transmitting and received symbol frame sequences are represented by Eqs. (9) and (10). The following explanation is given for the 0-th frame (n = 0). The description on the modulation to the radio frequency band is omitted here.

The receiver applys correlative-demodulation to g(t) in Eq. (63) contained in the baseband received frame with the chip waveform q(t), the address spreading sequence g(i) in Eq. (18) can be obtained. The receiver prepares a sequence g(i) synchronous with this component of the address spreading sequence as a reference sequence, and performs the demodulation. Let be the $\Lambda\alpha(k)$ and $\Lambda\beta(k)$ auto-correlation function of the $\alpha(i)$ and $\beta(i)$, the whole auto-corre-

lation function $\Lambda_s$ is given by Eqs. (21) through (23).

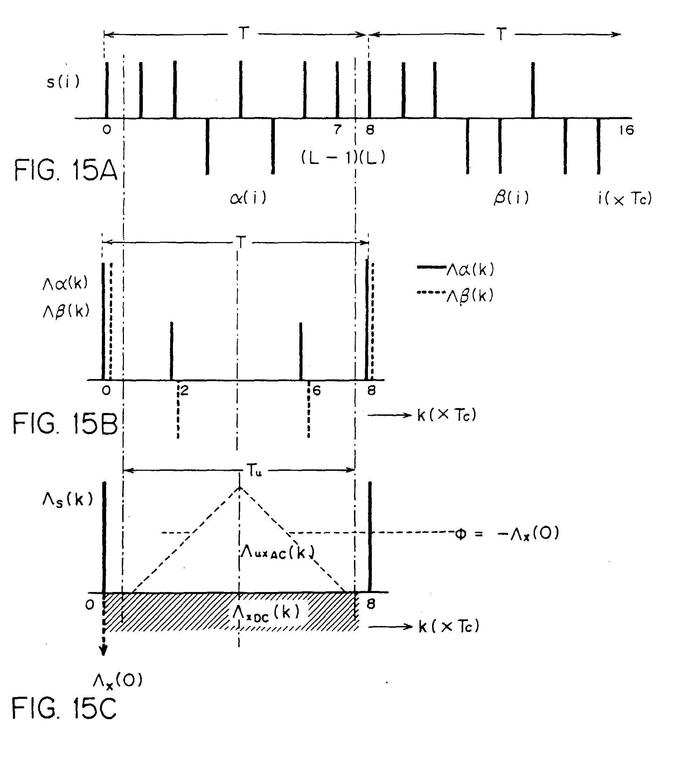

FIGS. 15A through 15C show examples of signal sequences s(i) and their correlations. FIG. 15A shows an example of s(i) = bg(i) = b{α(i) + β(i)} where b = 1. FIG. 15B shows Λα(k) and Λβ(k). FIG. 15C shows a correlation function for the noise to be described later. Let us use the previously described complementary sequences α(i), β(i) which satisfies Eq. (24) at the shift position except 0 and a multiple of L shift positions.

The above described auto-correlation functions Λα(k), Λβ(k) are the outputs when signals α(i) and β(i) are applied to the matched filters matching to α(i) and β(i) respectively. The sum of them $\Lambda_s$(k) takes 0 at any shift position other than the zero shift. FIGS. 15A through 15C show the relationship. Since Λα(2) and Λα(6) in Λα(k) are cancelled by Λβ(2) and Λβ(6) in Λα(k) respectively, $\Lambda_s$(k) → 0 where k # 0. Therefore, the leading half portion of the received signal in Eq. (63) is applied to the matched filter for α(i), and the trailing half portion is applied to the matched filter for β(i). The sum of the outputs is given by Eqs. (25) through (29).

Now, let us consider the noise having no direct currents as shown in Eqs. (32) and (33).

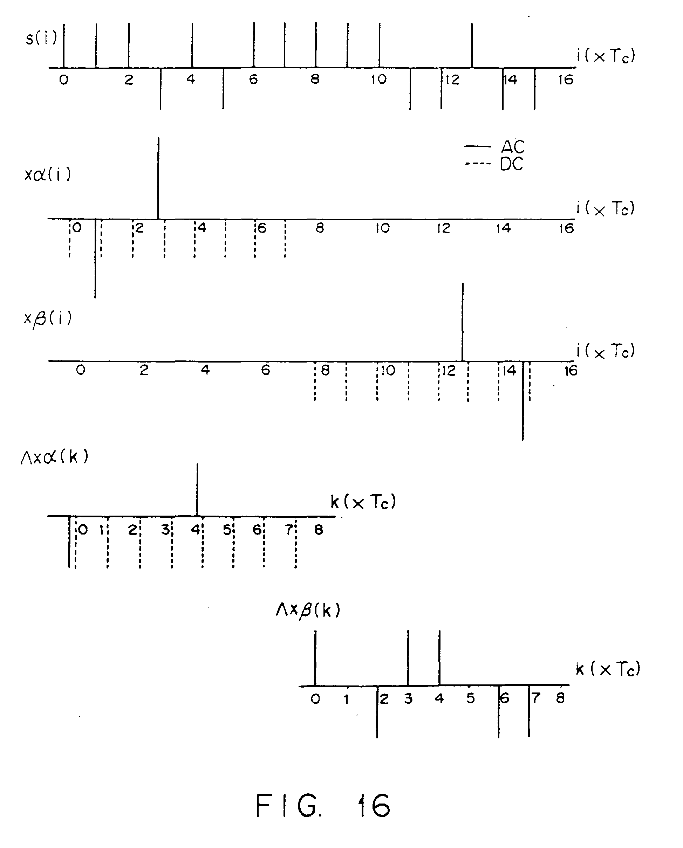

FIG. 16 shows the cross-correlation function of the alternate current noise (compared with the direct current noise and signal), and Eqs. (64) through (66) represent the correlation output for noise.

$$\Lambda_X(k) = \Lambda_{X\alpha}(k) + \Lambda_{X\beta}(k) \qquad (0 \le k \le L\text{-}1) \qquad (64)$$

$$\Lambda_{X\alpha}(k) = \frac{1}{L}\sum_{i=0}^{L-1} x_i \alpha^*_{i+k} \qquad (65)$$

$$\Lambda_{X\beta}(k) = \frac{1}{L}\sum_{i=0}^{L-1} x_{i+L} \beta^*_{i+k} \qquad (66)$$

where, the shift time k = 0, (±L, ±2L, ...) is named a (signal) correlated region $T_{c0}$, k = 1 through L - 1 is named an (signal) uncorrelated region $T_u$. The partial cross-correlation function on the period $T_u$ is denoted by $\Lambda_u$(k). Although a signal s(i) is contained in the received frame r(i), $\Lambda_u$(k) is a noise only dependent waveform, it equals $\Lambda_{ux}$(k). The impulse train $\Lambda_R$(k) in Eq. (34) corresponds to the correlation function for the entire region. The sum of the impulses in Eq. (35) on the uncorrelated region $T_u$ is represented by Φ as follows.

$$\Phi_X = \sum_{m=1}^{L-1} \lambda_m \qquad (67)$$

As shown in FIGS. 15A through 15C, and 16, the output at any shift other than the zero shift takes 0 even if s(i) = 0 or a signal exists. Therefore, the Φ in Eq. (67) depends only on the noise. When the noise x(i) on the leading half frame contains no direct current component, the correlation functions are $\Lambda_X$(0) and $\Lambda_{uxAC}$(k) [k = 1 through L - 1] shown in FIG. 15C. Since β(i) has no direct current component, it is considered alternate current noise even if x(i) on the trailing half frame contains direct current component, the correlation functions agree with $\Lambda_X$(0) and $\Lambda_{uxAC}$(k). This is clearly indicated by the correlation functions $\Lambda_X\alpha$(k) and $\Lambda_X\beta$(k) respectively corresponding to the direct and alternate current components of the input noise α(i) and β(i) shown in FIG. 16. Therefore, when $X_{DC}\alpha$=0, the following equation holds good.

$$\Lambda_X(0) + \Phi = 0 \qquad (68)$$

Therefore,

$$\hat{\Lambda}_R(0) = \Lambda_R(0) + \Phi_X = b\Lambda_s(0) \qquad (69)$$

is derived.

As a result, obtaining Φ enables the noise free signal detection.

Let us describe a case where only a biased orthogonal sequence α(i) is chosen as an address spreading sequence. In this case, Eq. (35) is represented as follows.

$$\Lambda_u(k) = \Lambda_{u\alpha}(k) + \Lambda_{ux}(k) \tag{70}$$

$$\Lambda_{u\alpha}(k) = \Lambda_\alpha(2) + \Lambda_\alpha(6) \tag{71}$$

where $\Lambda_u\alpha(k)$ is a biased value. However, $\Lambda_u\alpha(k)$ in Eq. (71) is always positive, consequently the following equation is derived.

$$\Lambda_\alpha(0) = \Lambda_\alpha(2) + \Lambda_\alpha(6) = \Lambda_\beta(0) \tag{72}$$

Therefore, $\hat{\Lambda}_R(0)$ in Eq. (69) can be obtained using only $b\alpha(i)$ as a transmitting frame. In this case, the following equation holds good.

$$\Phi = \Lambda_x(0) + b\{\Lambda_\alpha(2) + \Lambda_\beta(6)\} \tag{73}$$

Therefore, the following equation can be obtained.

$$\begin{aligned}
\hat{\Lambda}_R(0) &= b\Lambda_R(0) + \Phi_x \\
&= b[\Lambda_\alpha(0) + \Lambda_\beta(0)] \\
&= b\Lambda_s(0)
\end{aligned} \tag{74}$$

where the same output as the case where $\alpha(i)$ and $\beta(i)$ are used can be obtained. Accordingly, the noise-free detection can be achieved by using only $\alpha(i)$.

As the above described reference spreading sequences, one or both of the complementary sequences produced from an even-shift-orthogonal sequence having the sequence length $L=2^{(2n+1)}(n=1, 2, 3, ...)$ can be used.

Considering mobile CDMA communications, radio LAN, and radio broadcast, delayed waves generated by a transmitted signal from a desired station due to multipath effect, and a direct wave transmitted by another user station, and its delayed waves are coming in as interference noise. The present invention produces the noise-free detection by designing the system so that these interference waves may not contain direct current components. An asynchronous up-link communications system where signals from a number of user stations are simultaneously transmitted to a base station is taken for an exsample application for a technically easier down-link synchronous communications system, this invention can also be applied.

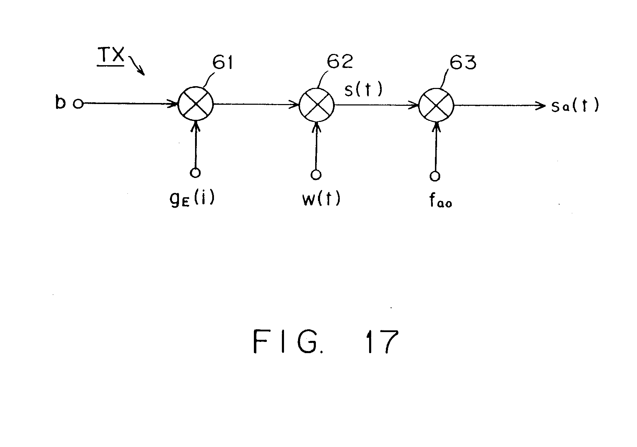

FIG. 17 is a block diagram of the configuration of the circuit of the transmitter according to the second embodiment of the present invention. The transmitter TX has three modulators 61 to 63. TX produces an extended sequence $g_E(i)$ by adding dummy chips (described later) to a reference sequence $g(i)$ as the transmitting sequence. The modulator 61 modulates $g_E(i)$ with a transmitting information b. The modulator 62 convolutes each chip with the sampling function waveform w(t), and generates a baseband waveform s(t). Then, the modulator 63 modulates a carrier wave $f_{ao}$ with s(t) to produce $s_a(t)$ which is sent out.

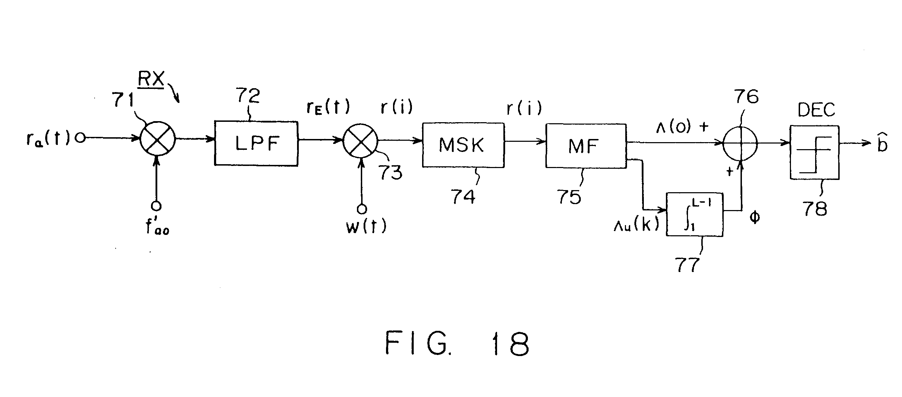

FIG. 18 is a block diagram of the configuration of the receiver circuit according to the second embodiment of the present invention. In FIG. 18, 71 and 73 are multipliers (modulator), 72 is a low pass filter (LPF), 74 is a frame reconfiguration circuit (MSK), 75 is a matched filter (MF), 76 is an adder, 77 is an integrator, 78 is a hard decision circuit (DEC), $r_a(t)$ is a received signal, $r_E(t)$ is a received baseband signal (for 1 frame in this embodiment), r(i) is a received frame impulse train, $\Lambda_u(k)$ is a partial cross-correlation function on the period $T_u$, $\Lambda(0)$ is a zero shift value of a correlation function, $\Phi$ is an integral value of the correlation functionan at all the shift except at the zero shift, $f'_{ao}$ is a local carrier wave, $\hat{\Lambda}_R(0)$ is an estimated value of transmitted information.

At the receiver RX, the multiplier 71 first demodulates the received signal $r_a(t)$ with the local carrier wave $f'_{ao}$, and inputs the demodulated output to the low pass filter (LPF) 72, thereby generating a received baseband frame $r_E(t)$. $r_E(t)$ is demodulated into a discrete sequence $r_E(i)$ using the chip waveform w(t) by the multiplier 73. $r_E(i)$ is a received frame in which noise is added to the extended sequence $g_E(i)$. The frame reconfiguration circuit (MSK) 74 in the receiver RX generates a received kernel core frame r(i) from $r_E(i)$ by removing the above described dummy chips, and applys the frame r(i) to the matched filter (MF) 75, and obtains the zero-shift value $\Lambda(0)$ and the other values of the correlation function. The integrator 77 obtains the integral value $\Phi$ of the output other than the zero shift. The zero shift value $\Lambda(0)$ of the correlation function and the integral value $\Phi$ of the function at all the shift except the zero shift are added up by the adder 76. The hard decision circuit (DEC) 78 performs a demodulating process by making a hard decision for the output $\hat{\Lambda}_R(0)$ of the adder 76 to detect the transmitted information $\hat{b}$. The operations of the matched filter (MF) 75 and the hard decision circuit (DEC) 78 are fundamentally the same as those according to the first embodiment of the present invention.

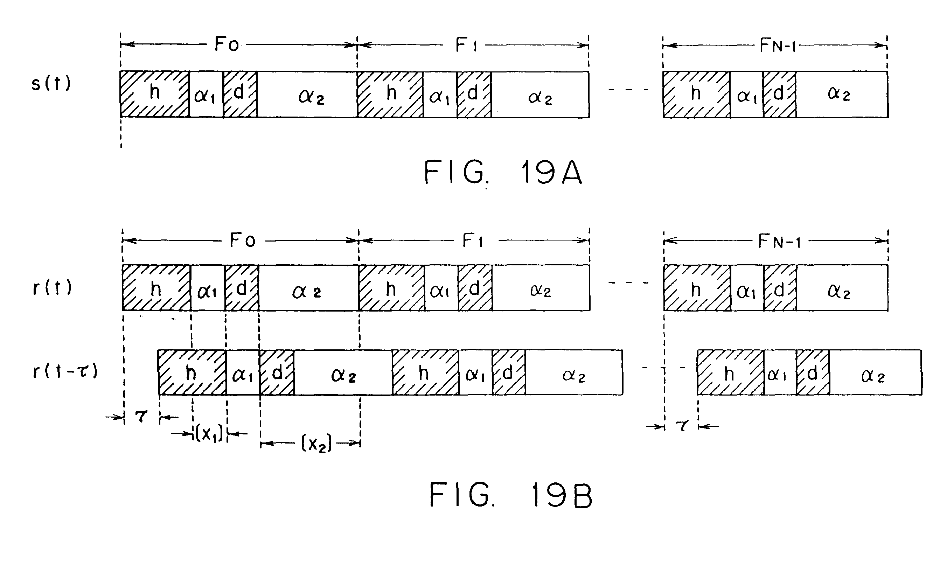

The method how to add the important dummy chips is described below. FIGS. 19A and 19B show examples of the configuration of the extended frames obtained by adding the dummy chips. FIG. 19A shows a transmitting frame. FIG. 19B shows a direct wave r(t) and a delayed wave r(t - $\tau$) arriving in the received frame. For simplicity, in this example, it is assumed that the direct wave r(t) is adjusted so that the amplitude is amplified to the same level as that of the transmitted wave after receiving of amplification.

In FIG. 19A, $\alpha$ is a reference sequence consisting of $\alpha_1$ and $\alpha_2$, h is a heading dummy sequence, d is an intermediate dummy sequence inserted between $\alpha_1$ and $\alpha_2$, and the whole sequence is an extended frame $g_E(i)$. The polarity of $g_E(i)$ on each frame is non-inverted or inverted according to the transmitting information b. However, this polarity change is omitted here in FIG. 19A. FIG. 19B shows a received frame when the receiver RX received the transmitting frame shown in FIG. 19A. r(t) is a direct wave, and r(t - $\tau$) is an self-delayed wave due to multi-path effect. The receiver RX prepares a mask signal $e_M(i)$ synchronous to the direct wave r(t) of a received frame. $e_M(i)$ removes received chip inputs at the dummy positions of the direct wave r(t). A received core frame in Eq. (12) is produced from the remaining input. $r_i$ and $x_i$ respectively denote the received voltage and noise voltage at the i-th chip position. $[X_1]$ and $[X_2]$ shown in FIG. 19B are noise generally covering a plurality of chips.

The direct current component $X_{DC}$ of the noise sequence is given by $X_{DC}\alpha$ in Eq. (32), but is generally not 0. However, $X_{DC}\alpha \to 0$ can be achieved by appropriately selecting the polarity of the heading dummy chip h, and the chip position and the polarity of the intermediate dummy chip d. Generally, a received frame for demodulation can be one of the delayed waves depending on the transmission path having a multipath. In this case, since a preceding wave r(t + $\tau$) can be an interference wave. To cope with the interference, tail dummy chips h' are added as described later.

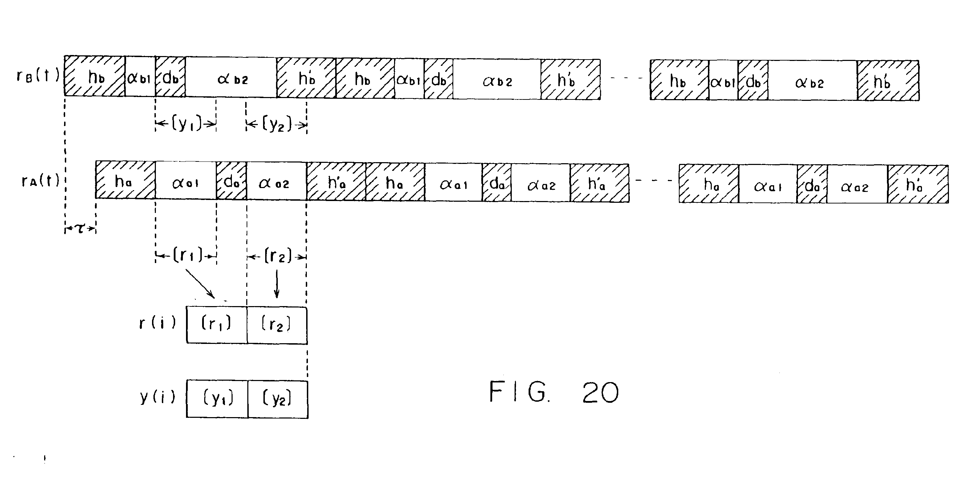

FIG. 20 shows signals $r_A(t)$ and $r_B(t)$ arriving at the base station from stations A and B. The received frame is the sum of the signals. The extended sequence for generating these signals is made by adding the dummy chips h and h' to the front and tail portions of the address spreading sequences ($\alpha_1$, $\alpha_2$), and furthermore adding the intermediate dummy chips d. The dummy patterns are designed depending on the address spreading sequence, and the family group address spreading sequences which are used in the same cell.

In FIG. 20, let signal addressed to the station B be an interference wave, and let a signal addressed to the station A be a desired wave. The portion containing the signal ($\alpha_{a1}$, $\alpha_{a2}$) of $r_A(t)$ is taken out of the received frame using the mask signal $e_M(i)$. The outputs are denoted as $[r_1]$ and $[r_2]$. $[r_1]$ and $[r_2]$ are consist of $\alpha_{a1}$ and $[y_1]$ in $r_B(t)$ and $\alpha_{a2}$ and $[y_2]$ in $r_B(t)$ respectively. $[y_1]$ and $[y_2]$ are inter-station interference noise. In FIG. 20, the received core frame is r(i) = $[r_1]$ + $[r_2]$ containing the noise (= $[y_1]$ + $[y_2]$). In FIG. 20, $r_B(t)$ arrives faster than $r_A(t)$ by $\tau$, which is a general asynchronous transmission. Assuming that h = h' and the following equation,

$$| \tau | < hT_C \tag{75}$$

The above described received core frame $r_A(t)$ does not contain the boundary of the interference wave $r_B(t)$. Therefore, demodulation can be performed in the quasi-synchronous state.

In the quasi-synchronous state, the interference wave can be always regarded as periodic sequences. The allowable time difference $\tau$ depends on the dummy chip length. Assuming h = h' and considering all the positive and negative shift range which satisfys the following equation,

$$| j | < h \tag{76}$$

From the view point of reducing the direct current component contained in the interference wave, let us set up a condition to satisfy the following equations within the shift range.

$$X_{DC}, Y_{DC} \to \varepsilon \tag{77}$$

$$\varepsilon \ll \Lambda_S(0) \tag{78}$$

The noise is so divided into two types that $X_{DC}$ is a direct current component given by the self-interference wave $x_i$, and $Y_{DC}$ is a direct current component by the inter-station interference wave $y_i$. This condition requires not only for the interference wave from the station B to A, but also for the interference wave from the station A to B. That is, generally, the condition should be satisfied for the interference among all the stations communicating each other simultaneously.

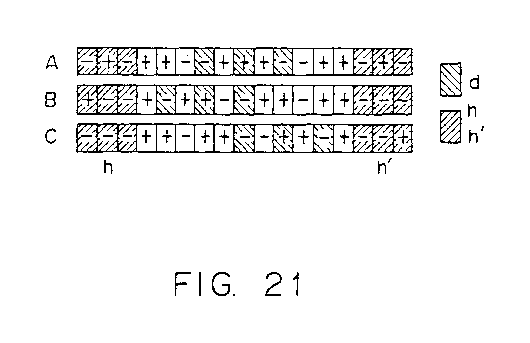

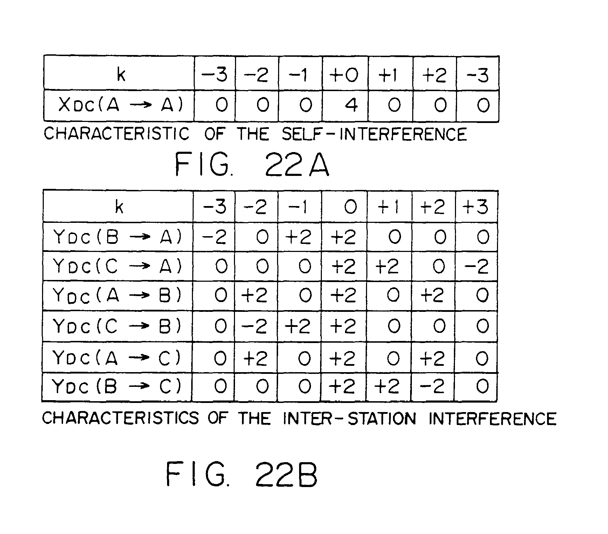

FIG. 21 shows an example of a family of three extended sequences which satisfy $\varepsilon \leq 2$ for $| j | = 3$ based on address spreading sequences with L = 8. FIGS. 22A and 22B show the characteristics of the self-interference direct current component $X_{DC}$ (A $\to$ A) and the inter-station interference direct current component $Y_{DC}$ (B $\to$ A) which are

important for detecting a signal addressed to the station A on condition that the above described sequences are assigned to the stations A, B, and C. As shown in FIG. 22A, the self-interference direct current component of each extended sequence for | j | = 3 satisfies the following equation.

$$X_{DC} = 0 \tag{79}$$

When a system is designed using such extended sequences, the demodulation process is subject to a little disturbance by the interference wave because $Y_{DC}$ is not 0. However, the influence is considerably reduced, thereby removable reduction of the error rate can be achieved.

In addition, in the explanation stated above, the dummy pattern is designed based on the evaluation measure $X_{DC} \to 0$ and $Y_{DC} \to 0$. Instead the measure can also be $\Lambda(0) \to 0$. In this case, it is not necessary to limit the address spreading sequences to orthogonal sequences or biased orthogonal sequences.

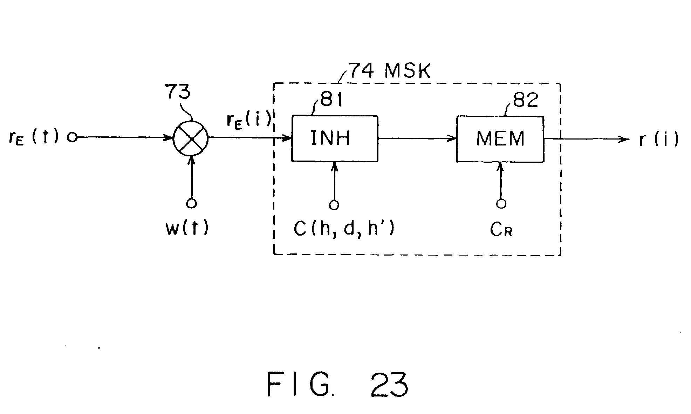

FIG. 23 shows the mask circuit (MSK) 74 shown in FIG. 18, which is equiped with an inhibit circuit (INH) 81 and a memory circuit (MEM) 82.

When a received extended frame $r_E(t)$ arrives, from the correlation output (or convolution integral output) between the frame and the chip waveform w(t), the extended frame chip sequence $r_E(i)$ can be obtained. The inhibit circuit (INH) 81 removes the dummy chip portion in the sequence $r_E(i)$ using a dummy timing signal C (h, d, h'), and adds the output to the memory circuit (MEM) 82. The received core sequence r(i) is obtained by reading out the sequence stored in 82 with the read timing signal $C_R$ which is a little delayed than the dummy timing signal C (h, d, h').

〈 Third Embodiment 〉

In the above described second embodiment of the present invention, techniques that the interference the direct current component may not be contained in a received core frame is established by modifing the spreading sequences. According to the third embodiment, the direct current component contained in a transmitting frame by each station is transmitted via another channel, as a result the interference direct current component contained in the received frame can be estimated with the channel.

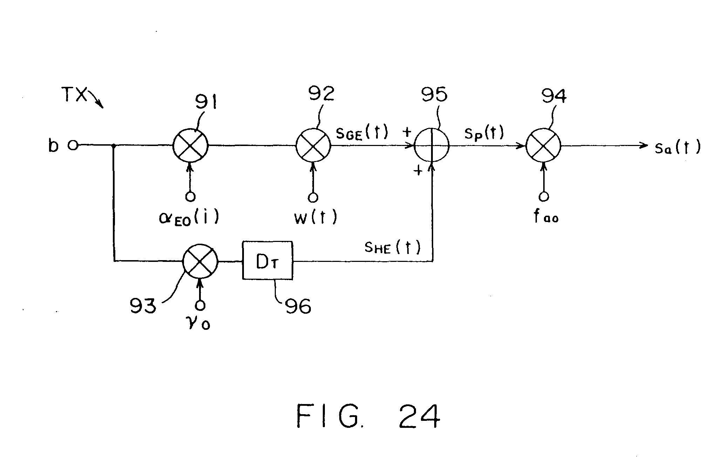

FIG. 24 is a block diagram of the configuration of the transmitter circuit according to the third embodiment of the present invention. The transmitter TX has four modulators 91 through 94, an adder 95, and a delay circuit ($D_r$) 96. Let the user number n of the transmitter TX be 0.

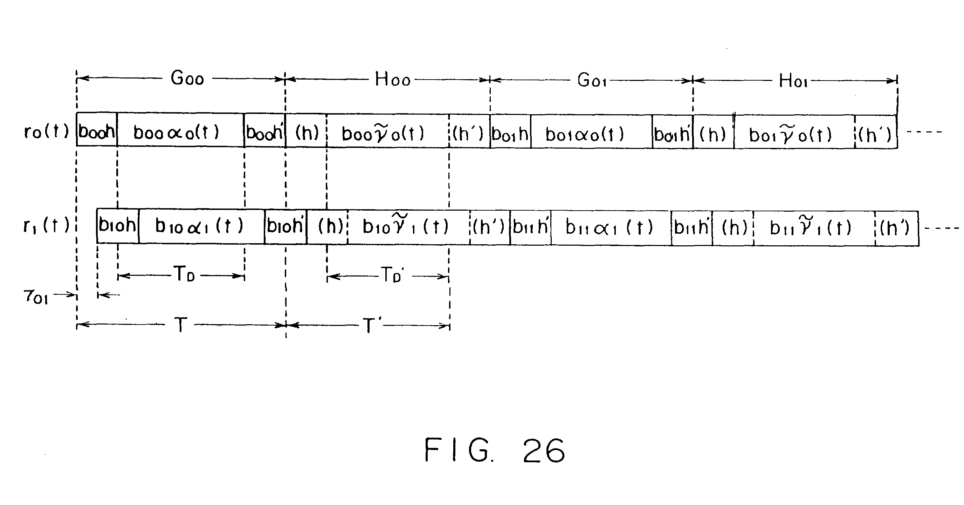

In the transmitter TX, the modulator 91 first modulates with the transmitting information b the extended sequence G(i) (frame G) having the biased core orthogonal sequence $\alpha_0(i)$, which is an address spreading sequence. Based on the output, the modulator 92 further modulates (for example, convolutional modulation) the chip waveform w(t), thereby generating an output $S_{GE}(t)$. On the other hand, an frame H, which follows and has the same length as the frame G, is generated. The carrier wave $\tilde{\gamma}_0(t)$ of the intermediate frequency on the frame H is modulated by the transmitting information b, and a delay circuit 96 delays the output by frame length T, thereby generating the additional frame $S_{HE}(t)$. A transmitting pair frame $S_p(t)$ is made by arranging (adding) $S_{GE}(t)$ and $S_{HE}(t)$ in the adder 95 in a time-division manner as described later as shown in FIG. 26. Then, the modulator 94 modulates the radio band carrier wave $f_{a0}$ with $S_p(t)$, thereby generating a radio band transmitting frame $S_a(t)$.

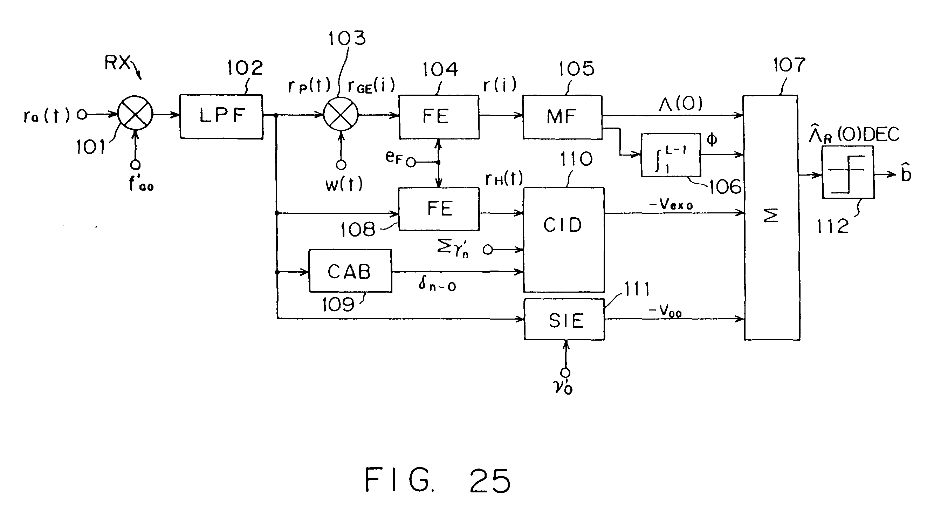

FIG. 25 is a block diagram of the configuration of the receiver circuit according to the third embodiment of the present invention. In this embodiment, the receiver RX demodulates a transmitted signal addressed to the 0-th user.

When a received signal $r_a(t)$ corresponding to the $S_a(t)$ is recived, a modulator 101 demodulates the local carrier wave $f'_{a0}$ using the $r_a(t)$, and a low pass filter (LPF) 102 limits the band. As a result, a received pair frame $r_p(t)$ is generated. When a modulator 103 modulates the chip waveform w(t) with frame G, $r_{GE}(t)$, which is the leading portion of $r_p(t)$, the received extended chip sequence $r_{GE}(i)$ is reconstructed. Then, a core frame extraction circuit (FE) 104 extracts only the central part of the $r_{GE}(i)$, and generates a received core frame $r_G(i)$. $r_G(i)$ is added to the same matched filter (MF) 105 as shown in FIG. 18. As a result, a determination output $\hat{b}$ should be obtained. However, in this system, the final demodulation output $\hat{\Lambda}_R(0)$ , which is input to a hard decision circuit (DEC) 112, is different from those obtained by Eq. (69) or (74), and can be obtained by the following equation.

$$\hat{\lambda}_R(0) = b\Lambda_R(0) + \Phi - V_{ex0} - V_{00} \tag{80}$$

where $v_{ex0}$ and $v_{00}$ are interference wave control signal.

In FIG. 25, the received additional frame H, $r_{HE}(t)$, trailing portion of $r_p(t)$, is applied to a core frame extraction circuit (FE) 108. Only the core frame $r_H(t)$ is applied to a cross interference detection circuit (CID) 110. The cross interference detection circuit 110 outputs a sum $v_{ex0}$ of the estimated direct current component contained in the received core frame in the frame H arriving from each interfering station except the 0-th station using $r_H(t)$, the n-th user carrier

wave $\gamma'_n$(n = 1, 2, 3, ..., N), and a control signal gain calibration output $\delta_{n-0}$ for n-th interference wave which is provided by a control signal gain calibration coefficient detection circuit (CAB) 109. The output $v_{ex0}$ is an inter-station interference control signal, and is given by the following equation.

$$V_{ex0} = \sum_{n=1}^{N} \hat{X}_{DC}(n\rightarrow 0) \tag{81}$$

where $\hat{X}_{DC}(n\rightarrow 0)$ is an estimated value of the interference direct current component on the received core frame $r_G(t)$ provided by the n-th interfering station to the 0-th desired station.

On the other hand, the received additional frame $r_H(t)$ is also applied to a self interference estimation circuit (SIE) 111. The self interference estimation circuit 111 detects preceding waves and delayed waves generated by a desired wave due to multipath, and produces a self interference control signal $v_{00}$ given by the following equation using a user carrier wave of the desired station.

$$v_{00} = \hat{X}_{DC}(0\rightarrow 0) \tag{82}$$

where $\hat{X}_{DC}(n\rightarrow n)$ is generally an estimated value of the self interference direct current component generated by the transmission wave the n-th station has sent out. Using $v_{ex0}$ and $v_{00}$, the demodulation output without the interference direct current component as shown in Eq. (80) is produced. Therefore, the correct detection can be performed based on the above described theory. Thus, in the receiver RX, an operational unit 107 performs an operation represented by Eq. (80), and the operation result (final demodulation output) $\hat{\Lambda}_R(0)$ is the input to the hard decision circuit (DEC) 112 to obtain a judged output $\hat{b}$ .

The control signal gain calibration coefficient detection circuit (CAB) 111 extracts a core frame G, $r_G(t)$, and frame H, $r_H(t)$, which have been received at the pilot frame timing ($GH_n$) described later and assigned for calibrating the transmission gain of the channel from the n-th station. As described later, the control signal gain calibration output $\delta_{n-0}$ which is used to exactly control the direct current component disturbance $\hat{X}_{DC}(n\rightarrow 0)$ , $\hat{X}_{DC}(n\rightarrow 0)$ is the direct current component on frame G of the 0-th station which is produced by the transmitting signal of the n-th station. $\delta_{n-0}$ is used by the cross interference detection circuit (CID) 110.

This additional frame is composed on a time divisional system or a frequency divisional system. The following explains mainly description the former system. FIG. 26 shows the configuration of the baseband frame used by the time-divisional additional frame system. FIG. 26 shows a received frame $r_0(t)$ of a desired station (n = 0), and a received frame $r_1(t)$ of an interfering station (n=1). They have a time difference $\tau_{01}$. A transmitting frames have corresponding formats, but are not shown here. Consider the 0-th paired frame of the frame sequence $r_0(t)$. In FIG. 25, a paired frame is indicated by $r_p(t)$, which consists of frame G and frame H. In this example, the 0-th frame addressed to the 0-th station is indicated by $G_{00}$ and $H_{00}$. $G_{00}$ is a extended frame G obtained by adding dummy chips h and h' to the front and tail of the address spreading sequence, and then multiplying it by the transmitting information $b_{00}$. $H_{00}$ is an additional frame H obtained by multiplying the sine wave $\tilde{\gamma}_0(t)$ corresponding to n=0 by $b_{00}$. In this example, let the length of frame H be equal to T, the length of frame G for convenience. When $G_{00}$ and $H_{00}$ are received and demodulated, the received core frames [$r_G(t)$ and $r_H(t)$ shown in FIG. 25] having the length $T_D$ and $T'_D$ where h and h' are removed respectively. h and h' on $G_{00}$ has the function of keeping constant the direct current component of the interference wave in such quasi-synchronous state as given by Eq. (75). h and h' on $H_{00}$ are the dummy portions (the extension of a sine wave on a core frame is contained) required to exactly detect a signal in the quasi-synchronous state.

Frame H of the present system has the function of transmitting the interference control signal corresponding to the direct current component information b so that the receiver may utilize the direct current component information of the transmitting frame an interfering station transmit. To transmit the information, a different user carrier wave (intermediate frequency) is assigned to each user. That is, the frequency given by the following equation is assigned to the n-th user.

$$\gamma_n = (n+1)f_0 \tag{83}$$

$$f_0 = 1/T_D \tag{84}$$

Therefore, when a demodulation process is performed using a core frame on $T'_n$ at the receiver, the different n carrier waves are orthogonal to each other.

Thus, the n-th user produces an intermediate frequency additional frame $s_H(t)$ by both side-band modulating frequency $\gamma_n$ with frame H (rectangular wave with length T and amplitude $b_n$), and then modulates the carrier wave $f_{ak}$ with both $s_H(t)$ and the above described spreading frame $s_G(t)$, producing transmits the radio band transmitting paired

frame $s_a(t)$, and transmitting it.

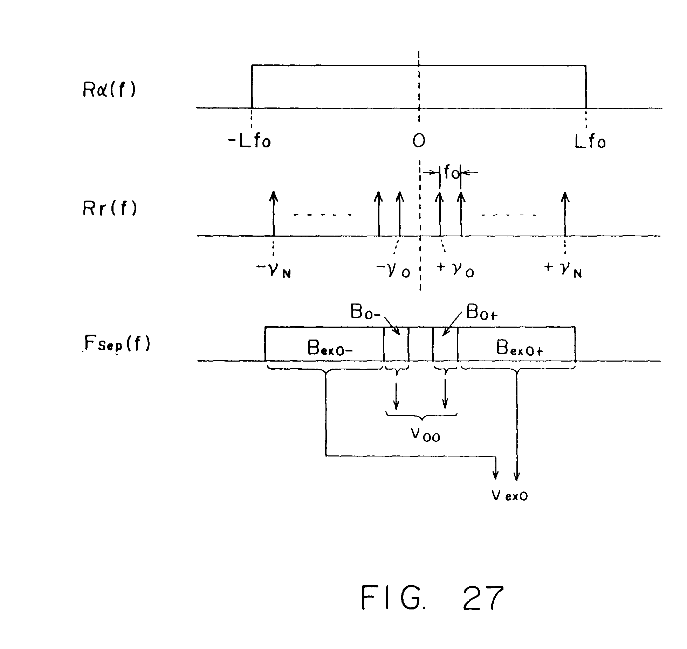

FIG. 27 shows the frequency spectrum of the baseband received paired frame shown in FIG. 26. $R\alpha(f)$ is the spectrum of the received core frame extracted from the frame G, and $R\gamma(f)$ is the spectrum of the received core frame extracted from the frame H. Both of them occupy substantially the same band. $R\gamma(f)$ is a discrete spectrum consisting of a pair of sine waves $(n + 1)f_0$ corresponding to the user number n. $F_{sep}$ refers to such a band region as to separate the band when frame H is applied to the filter. The output passing through the band $B_{0+}$ and $B_{0-}$ containing the $\pm\gamma_0$ produces the self interference control output $v_{00}$, and the output passing through $B_{ex0+}$ and $B_{ex0-}$ produces the inter-station interference control output $v_{ex0}$.

The local carrier wave $f'_{a0}$ used in the process of producing the received core frame synchronous with a signal addressed to the 0-th desired station is synchronous with the transmitting carrier wave $f_{a0}$, but is not synchronous with the carrier wave $f_{an}$ of the frame received from the n-th station. Therefore, even when $b_n = 1$, the direct current component $X_{DC}$ ($n \to 0$) based on $b_n$ contained in the above described received core frame is not always positive, but changes depending on the phase difference of $f'_{a0}$ and $f'_{an}$. The influence of the change is exactly transmitted twith the user carrier wave $\pm\gamma_n$, and reflected to the detection output $\hat{X}_{DC}(n\to0)$.

However, $X_{DC}$ ($n \to 0$) is a value generated through the transmission of the received core frame G using the band $B\alpha$, and $\hat{X}_{DC}(n\to0)$ is an estimated value obtained by the single sine wave $(\pm\gamma_n)$ transmission over the band $B_{n+}$ and $B_{n-}$. If the transmission path have a selective fading characterstics, it fluctuates $\hat{X}_{DC}(n\to0)$. Therefore, a calibrating function using a pilot signal is required to maintain the condition of $\hat{X}_{DC}\doteqdot X_{DC}$.

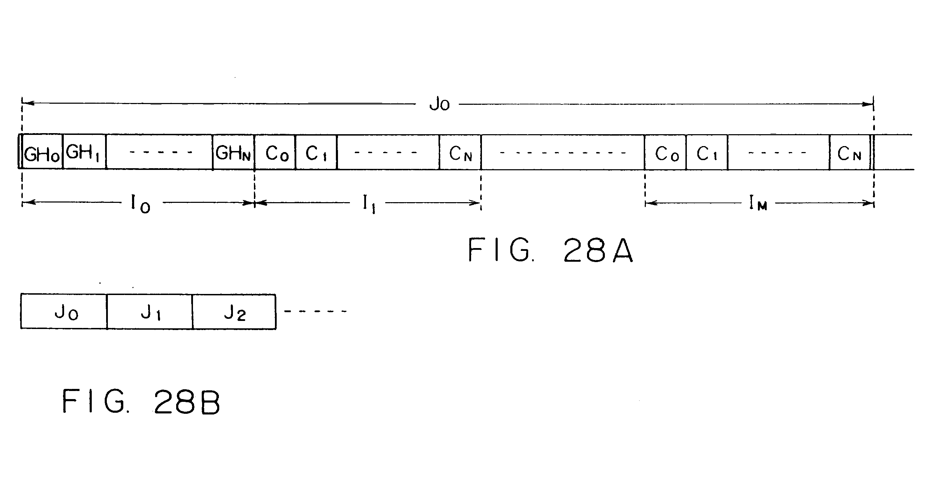

FIGS. 28A and 28B show a multi-frame configuration for the pilot frame transmission. $J_0$ in FIG. 28A is the 0-th first multi-frame, which consists of M pieces of the multi-frame $I_m$ (m = 0, 1, 2, ..., M). Let N be the number of users, $I_m$ consists of N paired frames. N paired frames $C_n$ (n = 0, 1, 2, ..., N) contained in the $I_1$ through $I_M$ are time slots to be shared by all the users. When each user transmits the transmitting frame and the base station receives them, the actually allowable timing fluctuation $| \tau |$ is given by Eq. (75). $I_0$ is the second pilot multiframe. At the n-th paired frame time slot $GH_n$, a pair of frames G and H shown in FIG.26 addressed to the station n are transmitted, and any other stations cannot use the paired frame slot. That is, the time slot is exclusively used by the n-th station.

The n-th station transmits frames G and H with the transmitting information $b_n = 1$, and the base station checks the detection output (described later) of the frames, that is, compares $v_s(n)$ [$=\Lambda_R(0)$, refer to Eq. (74)] with $v\gamma(n)$, and calibrates the demodulation gain of the user carrier wave $\gamma_n$ so that they may be equal to each other. Using N paired frames on $I_0$, N stations in the maximum can be calibrated. As shown in FIG. 28B, the first multi-frames are repeated as $J_0$, $J_1$, and $J_2$. The base station transmits the multi-frame synchronizing signal via the down-link with conventional technology.

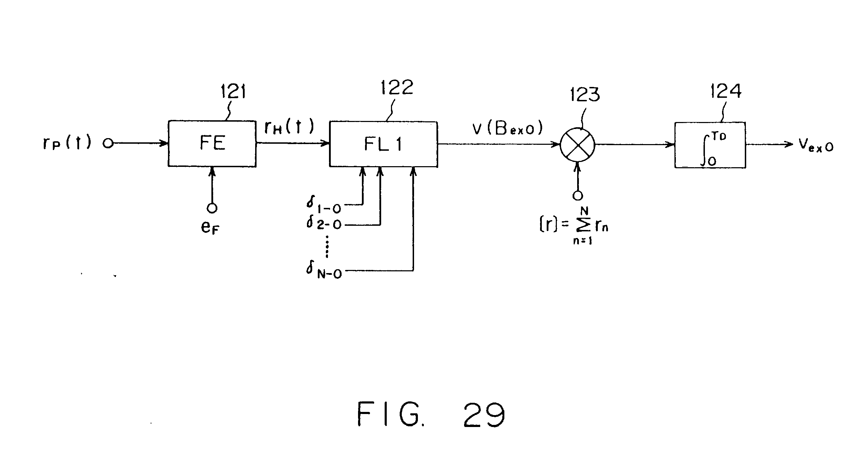

FIG. 29 is a block diagram of the above described cross interference detection circuit (CID) 110.

A frame extraction circuit (FE) 121 extracts with the timing pulse $e_F$ a received core frame H [the central portion without (h) and (h') shown in FIG. 26] from the received paired frame $r_p(t)$ which is the input to the cross interference detection circuit 110. The output is applied to the filter (FL1) 122, which produces an output $v(B_{ex0})$ occupying the band $B_{ex0+}$ and $B_{ex0-}$ shown in FIG. 27. When it is demodulated by the set $[\gamma]$ of the carrier waves except $\gamma_0$, the inter-station interference control signal $v_{ex0}$ can be obtained. This demodulation is performed by modulating the set $[\gamma]$ with the filter output $v(B_{ex0})$ at a modulator 123, and then integrating the output of the modulator 123 at an integrator 124 to obtain $v_{ex0}$. The filter (FL1) 122 has the function of amending the amplitude and the polarity of the direct current component according to the transmitting signal from each interfering station. The filter output $v(B_{ex0})$ is produced using the function.

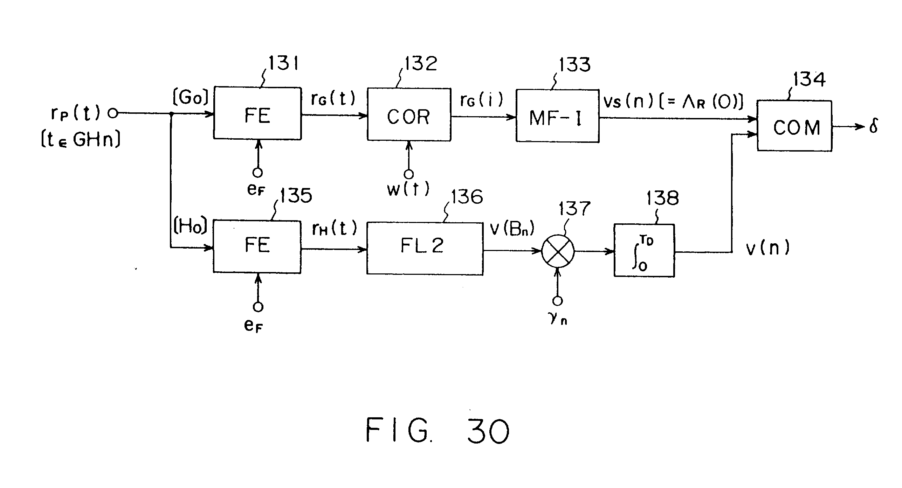

FIG. 30 is a block diagram of the control signal gain calibration coefficient detection circuit (CAB) 109. The control signal gain calibration coefficient detection circuit (CAB) 109 receives a received paired frame $r_p(t)$ addressed to the n-th station transmitted on the n-th frame $GH_n$ of the pilot multi-frame $I_0$ shown in FIG. 30. A frame extraction circuit (FE) 131 extracts the core portion $r_G(t)$ of frame G from $r_p(t)$, and another frame extraction circuit (FE) 135 extracts the core portion $r_H(t)$ of the frame H.

A correlator (COR) 132 demodulates $r_G(t)$ with a chip waveform $w(t)$ to produce $r_G(i)$. At this timing, since no station other than the n-th station transmits frames, a demodulation signal output $v_s(n)$ addressed to the n-th station is generated applying $r_G(i)$ to a reception circuit (MF-I: consisting of a matched filter and an integrator) 133 under the condition that a white noise level can be sufficiently negligible (easily realized by CDMA systems). However, since the above described local carrier wave $f'_{a0}$ for the 0-th station is used, $v_s(n)$ is the detection output corresponding to the inter-station interference when the transmitted frame G addressed to the n-th station is received.

On the other hand, $r_H(t)$ is applied to a filter (FL2) 136 which allows the n-th user carrier wave $\gamma_n$, to pass, producing the output $v(B_n)$. A modulator 137 modulates a local carrier wave $\gamma'_n$ with the $v(B_n)$, and integrates the output with an integrator 138, thereby producing an output $v\gamma(n)$ corresponding to the direct current component of a signal transmitted by the n-th station. A comparator (COM) 134 compares $v_s(n)$ with $v\gamma(n)$, and produces the gain calibration coefficient output $\delta_{n-0}$.

The phase of the received user carrier $\gamma_n$ depends on the time difference $(\tau_{n0})$ between the n-th interfering frame and the desired frame, producing an error in the detection output $v_n$. The error can also be calibrated using $\delta_{n-0}$.

Furthermore, an estimated value $v_{00}$ corresponding to the self interference direct current component due to transmitted wave addressed to the desired station (n = 0) as indicated by Eq. (80) is required for a exact demodulation operation. For this purpose, the self interference estimation circuit (SIE) 111 is equipped in the receiver RX shown in FIG. 25. In this example, the detailed explanation on circuit (SIE) 111 is omitted, but the estimated value $v_{00}$ is easily obtained by analyzing the frequency variation in frequency component due to the preceding wave or delayed wave contained in the leading portion (H) and the trailing portion (h') of frame H shown in FIG. 26. This analysis can be performed not only at the timing $GH_0$ on the multi-frame but also any timing.

As shown in FIG. 26, frames G and H are time-division-multiplexed. Therefore, these frames can share the same band. On the other hand, a frequency division multiplexing system, in which frames G and H are transmitted on the same time slot and each frame exclusively occupys a band separately arranged, can be similarly realized.

In the explanation on the above described embodiment, the intra-cell communications have been mainly explained. Mobile communications systems generally provide the services to a number of cells, and the same band is used in all the cells. Therefore, the technology of avoiding the inter-cell interference is alse indispensable.

In the additional frame system according to the second embodiment of the present invention, it is assumed that of the carrier wave $\gamma_n$ for adjacent cells are the same as that for the said cell. At this time, the direct current component in frame G transmitted by the n-th user belonging to another cell corresponds to the direct current $X_{DC}$ on the frame G which the base station received. Since the $\overline{X}'_{DC}$ is contained in the demodulation output $\overline{X}_{DC}$ of the core frame H, the direct current component of the interference waves from other cells can be removed. Assuming that a desired station is the 0-th station, since the transmitted frame of the 0-th user from another cell is not synchronous with that of the 0-th user from the said cell, the disturbance is analyzed as a self interference component, thereby the result is reflected to the estimated value $v_{00}$.

However, to calibrate the gain of an inter-cell interference control output, let us extend the length of the pilot frame $I_0$, and provide an additional time slots $GH_{N+1}$ through $GH_{N+S}$ in the multi-frame shown in FIG.28A. During the extended time slots, let us prohibit the transmission of all the users of said cell. As a result, the interference direct current component $v'_s = \Lambda_R(0)$ on frame G transmitted from other cells and the demodulation output $v'\gamma(n)$ of frame H can be detected over the S frames. By comparing and analyzing them, the influence from other cells can be reflected on to the gain calibration output.

In the above described description, a finite-length (non-periodic) bi-phase orthogonal sequence is used as g(i). However, there are a number of infinite-length (periodic) bi-phase orthogonal sequences or many biased orthogonal sequences each of which has such characterstics that the integral value of the auto-correlation at all the shift except zero shift is positive, can be used. Among the latter sequences, there are so-called Kasami sequences whose integral value takes 0. In addition, a quadri-phase orthogonal sequences can also be used. In this case, any sequence whose auto-correlation real part at any shift except 0,or the integral value takes 0 or positive, can be used.

Thus, since there are a number of types of sequences, different address spreading sequences can be assigned to adjacent cells. Therefore, it is not necessary to use the scramble sequences identifying cells which overlap the address spreading sequences. This is also an advantage over the conventional technology.

The above described additional frame system transmits a single sine wave using frame H. A plurality of sine waves or a chirp signal can be used instead of the single sine wave. Signals, which are orthogonal to each other and the receiver can identify the frame H components transmitted from respective users, can be generally used. If the chirp signals of different types in frequency-time characteristics are prepared, are allocated to the respective users said purpose can be achieved.

In the description above, it is assumed that a rectangular waveform is used as a chip waveform w(t). However, when a rectangular wave is used, a received chip waveform may be becomes distorted when a signal is transmitted through a band limited transmission channel, thereby generating inter-chip interference. This inter-chip interference results in considerable attenuating the demodulation output on the signal component that the receiver produces. To avoid this degradation and exactly performing the demodulating process, it is desired that an amended sampling function is used as the chip waveform at the transmitter. Since the auto-correlation function of an amended sampling function takes 0 at the position of positive or negative integer times of chip period (except 0), the receiver prepares the same waveform, and the continuation time waveform of a received frame is if correlative-demodulation with the same waveform prepared in the reciever is performed, the address spreading (impulse) sequence g(i) can be exactly reconstructed from the signal component contained in the demodulation output.

〈Fourth Embodiment〉

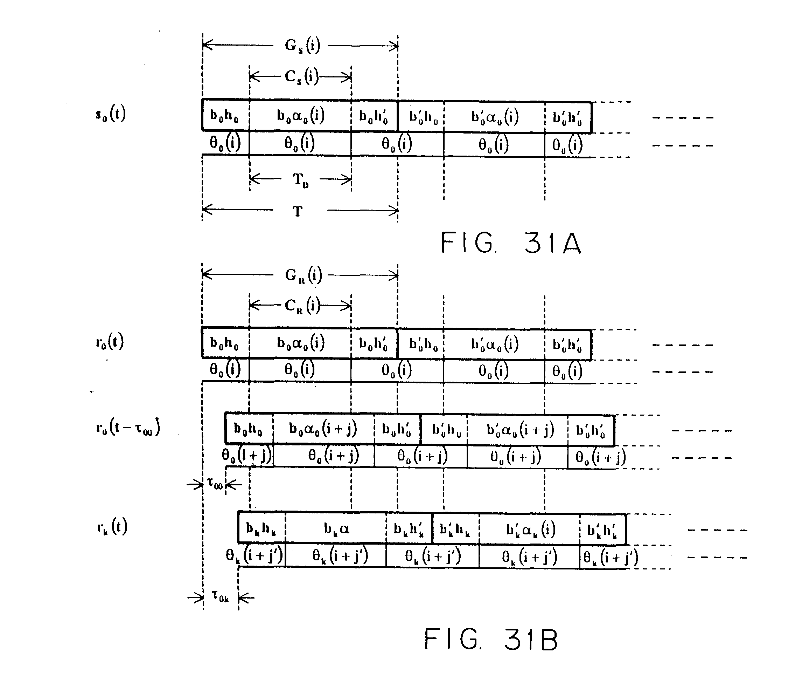

FIGS. 31A and 31B show the frame configuration for an address spreading sequence/scramble (code) sequence system according to the fourth embodiment of the present invention. FIG. 31A shows a transmitting frame while FIG. 31B shows three received frames with which a received signal is composed. The transmitting frame shown in FIG. 31A is composed of an extended frame (G) with frame length T which consists of an address spreading core sequence $\alpha_0(i)$ with frame length $T_D$ (=$LT_c$) and dummy chips of h (header) and h' (tail) which enclose $\alpha_0(i)$. First, the demodulation principle according to the present embodiment is described by referring to FIGS. 31A and 31B. In this example, the following relation is taken for convenience.

$$T = 2T_D = 2LT_C \tag{85}$$

Since, the lengths of h and h' are equal to each other, the following equation holds good.

$$hT_C = h'T_C = T_D/2 \tag{86}$$

$\theta_0(i)$ shown below extended frame G is the 0-th station scramble sequence with code length $T_D$, and arranged synchronously with the above described core frame as shown in the drawings. The baseband extended frame $G_s(i)$ is produced so that frame G is modulated with the transmitting binary information $b_0$ (spreading with the address sequence), and then $\theta_0(i)$ with 2-frame-length (central portion of 3 frames) is modulated (scramble spreading) by the output. $C_s(i)$, corresponding to the central portion of $G_s(i)$, is a transmitting core frame. A transmitting wave $s_a(t)$ is produced by convolutionally-multiplying $G_s(i)$ with a chip waveform $w(t)$, and then, modulating a carrier wave $f_{a0}$ with output. [$w(t)$, $f_{a0}$, and $s_a(t)$ are omitted in the drawings.]

As an example of a received signal r(t) at the receiver, FIG. 31B separately shows a synchronously received frame $r_0(t)$ addressed to the desired station, its delayed wave $r_0(t - \tau_{00})$, and an inter-station interference wave $r_k(t - \tau_{0k})$ coming from the k-th interfering station. The receiver demodulates the received signal using a local carrier wave $f'_{a0}$ and the chip waveform $w(t)$, and generates the impulse train of the baseband received signal. Tha synchronously received extended frame $G_R(i)$ is extracted from the received signal (impulse train) at the synchronous timing, and then the received core frame $C_R(i)$, the central portion of the frame $G_R(i)$, is extracted.

$C_R(i)$ contains the desired station received core frame $b_0\alpha_0(i)$, and the portions of the interference waves $r_0(t - \tau_{00})$ and $r_k(t - \tau_{01})$ corresponding to the duration of the desired station received core frame. In the demodulating process of $C_R(i)$, multiplying $C_R(i)$ by the scramble sequence $\theta_0(i)$ which has been used for producing $G_s(i)$, results in descrambling (inverse scrambling) $C_R(i)$. The descrambled output $d(i)$ is applied to a matched filter MF, the output $\hat{\Lambda}_R(0)$ shown in FIG. 20 is obtained, and judged with a hard-decision method to restore the transmitted information $\hat{b}_0$.

Consider the direct current component contained in $C_R(i)$ of the demodulated impulse by train r(i), by dividing it into the received frames $r_0(t)$, $r_0(t - \tau_{0\,0})$, and $r_k(t)$ as their impulse trains. Since $r_0(i)$ is obtained at the transmitter by multiplying $\alpha_0(i)$ by $\theta_0(i)$, the receiver performs the multiplication using $\theta_0(i)$ [a complex conjugate $\theta_0(i)$ for a 4-phase sequence] to obtain the following descrambled output $d_0(i)$.

$$d_0(i) = b_0\alpha_0(i)\theta_0(i)\theta_0(i) = b_0\alpha(i) \tag{87}$$

$$\theta_0(i) = \sum_{i=0}^{L-1} c_i\delta(t=iT_C) \tag{88}$$

where $c_i$ denotes the i-th binary code of the scramble sequence. $d_0(i)$ is equal to the transmitted wave from the desired station. Similarly, when it is assumed that $\tau_{00} = jT_c$, the following equation is obtained.

$$d_0(i-j) = b_0\hat{\alpha}_0(i+j)\theta_0(i+j)\theta_0(i) \tag{89}$$

$$\rho_{00}(j) = \frac{1}{L}\sum_{i=0}^{L-1} c_i c_{i+j} \tag{90}$$

where $d_0(i - j)$ is the descrambled output, and $\rho_{00}(i)$ is the j-shift auto-correlation value of sequence $\theta_0(i)$. $\hat{\alpha}_0(i+j)$ is a frame obtained by shifting the core frame on the extended frame $G_s(i)$ to the left by $jT_c$ and extracting the shifted result, and consists of the tail j chips of $h_0$ and the front L-j chips of $\alpha_0(i)$.

By selecting the polarity of $h_0$ as described in the second embodiment, it can be designed that the larger j is, the less the direct current component in $\hat{\alpha}_0(i+j)$ becomes. There are scramble sequences satisfying $\rho_{00} \to 0$ (or a very small value $\varepsilon$), when j = 0 or | j | takes a small value. [Shinya Matsufuji, and Kenji Takatsukasa, "pair of bi-phase sequence with periodic auto- and cross-correlation function taking 0 at a phase shift within the half sequence", No. 1027 in the Record of 1998 Joint Conference of Electrical Societies in Kyushu]. Let us select them for 0. With the configuration, the direct current component of $d_0(i - j)$ takes zero or a very small value under such a quasi-synchronous condition as $| j | < (L/2)$.

On the other hand, if $\tau_{ok} = j'\, T_c$ is assumed for an interference wave coming from the k-th interfering station, the following equation is obtained.

$$d_k(i\text{-}1') = b_k \hat{\alpha}_k(i+j')\theta_k(i+j')\theta_0(i) \qquad (91)$$
$$= b_k \hat{\alpha}_k(i+j')_{0p}(j')$$

$$\rho_{0k}(j') = \frac{1}{L}\sum_{i=0}^{L-1} c_i c_{i+j'} \qquad (92)$$

where $d_k(i - j')$, $\rho_{0k}(j')'$ and $c'_i$ are the descrambled outputs for an inter-station interference wave, the j' shift cross-correlation between $\theta_0$ and $\theta_k$, and the i-th chip amplitude of $\theta_0$. In this case, scramble sequences in which $\rho_{0k}(j') \to 0$ (or $\varepsilon$) with a small range of $|j'|$ is used. For a large value of $|j'|$, the interference due to the direct current components can be zero or reduced by designing the direct current component of $\hat{\alpha}_k(i+j')$ close to zero by selecting h and h'.

To remove the inter-cell interference, a family of scramble sequences in which the cross-correlation function between a scramble sequence of the said cell A and that of another cell B takes a small value at all the shift is prepared and assigned to each user, thereby achieving the purpose, that is, the signal element can be determined from the demodulated output without the influence of noise.

In the example above, different scramble sequences are used for the users in the same cell. An intra-cell common sequence can also be used. However, in this case, by providing a pilot frame as shown in FIG. 28A, a time difference between a desired wave and an inter-station interference wave is detected, and the transmitting timing of each user is controlled so as to make $\tau_{0k}$ # 0, it results in $\rho_{0k}(j')$ =0 (j' #0), thereby possibly achieving the above described purpose.

Let us describe the address spreading sequence/double scramble sequence system using a cell scramble sequence similar to the user scramble sequence as a method for removing inter-cell interference. The frame configuration is such a system that the m-th cell scramble sequence $\Psi_m(i)$, to which the user belongs, is arranged below the k-th user scramble sequence $\theta_k(i)$ shown in FIG. 31B. The frame length of $\Psi_m(i)$, and the time position are the same as those of $\theta_k(i)$.

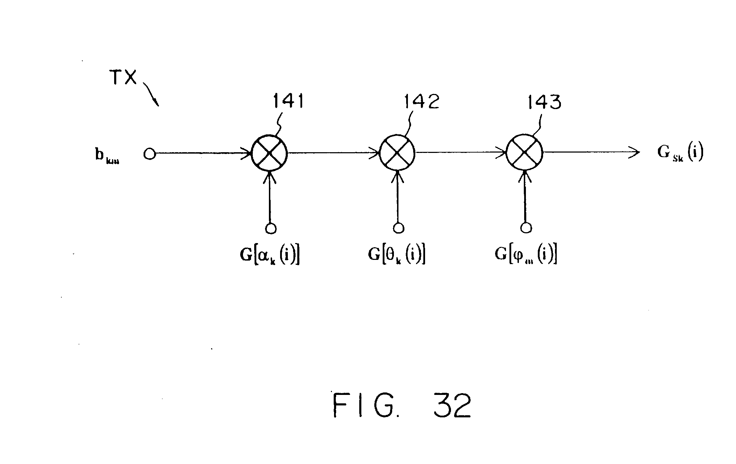

FIG. 32 is a block diagram of the configuration of the transmitter circuit according to the fourth embodiment of the present invention to which the above described system is applied. In this embodiment, the process of generating a baseband transmission frame of the k-th user belonging to the m-th cell is described.

In FIG. 32, $G[\alpha_k(i)]$ is an extended sequence (frame) obtained by adding a header $h_k$ and a tail $h'_k$ to the address spreading sequence $\alpha_k(i)$ shown in FIG. 31A, $G[\theta_k(i)]$ is an extended sequence (frame) of two-frame length (central portion of the three frames) of the k-th user scramble sequence, $G[\Psi_m(i)]$ is the m-th cell scramble sequence having the same configuration as the $G[\theta_k(i)]$. However, they belong to different families of small correlated region code sequences

Generally, the Eq. (75) and (76) do not hold good for such cases that time difference between the interference waves from different cells and the desired wave exists, that is to say, the boundary of an extended frame coming from another cell may exist on the received core frame from the desired station. To avoid the direct current due to the existence of the boundary, the second additional code $\hat{h}$, $\hat{h}'$ with length $T_D/2$ is provided outside each of the additional codes h and h', and the polarity of each chip of $\hat{h}$, $\hat{h}'$ is designed so that the absolute value of the interference direct current component due to the adjacent frames takes the minimum value for any time difference. In this case, the composite additional code is $[h]=(\hat{h}+h)$, $[h']=(h'+\hat{h}')$, and the length is $T_D$.

As shown in FIG. 32, at the transmitter TX, after a modulator 141 modulates $G[\alpha_k(i)]$ with the transmitting information $b_{km}$, and a modulator 142 modulates $G[\theta_k(i)]$ with the modulated $G[\alpha_k(i)]$, a modulator 143 modulates $G[\Psi_m(i)]$ with the modulated $G[\theta_k(i)]$. Thus, a transmitting baseband extended frame $G_{sk}(i)$ is produced and transmitted by sequentially modulating the above three sequences.

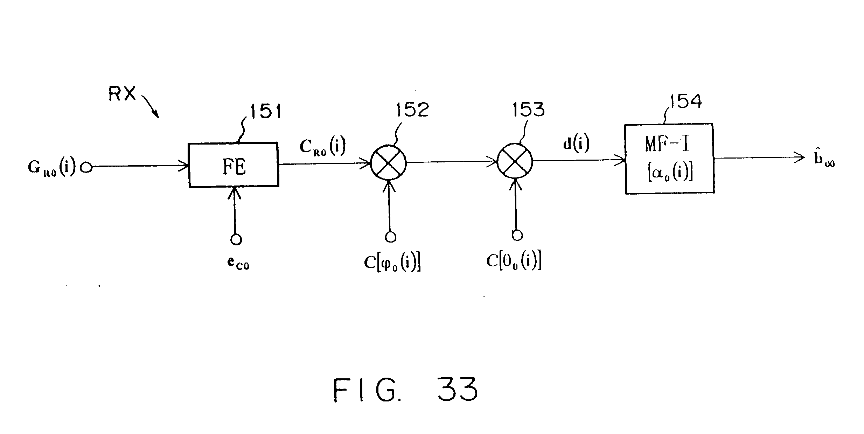

FIG. 33 is a block diagram of the configuration of the receiver circuit according to the fourth embodiment of the present invention. The 0-th user belonging to the 0-th cell is a desired station. In FIG. 33, $G_{R0}(i)$ is a synchronously received extended frame synchronous with the desired station. $C[\Psi_0(i)]$ and $C[\theta_0(i)]$ are respectively the 0-th cell scramble sequence and the 0-th user scramble sequence with one period on the received core frame.

At the receiver RX, the received core frame $C_{R0}(i)$ is extracted by appling $G_{R0}(i)$ and the timing wave $e_{c0}$ for extracting the received core frame to a frame extraction circuit (FE) 151. $C[\Psi_0(i)]$ and $C[\theta_0(i)]$ are synchronizes with each of the transmitted sequences. Using $C_{R0}(i)$, a modulator 152 modulates $C[\Psi_0(i)]$, and using the modulated output, a modulator 153 modulates $C[\theta_0(i)]$ to obtain a descrambled output d(i). The transmitted information $\hat{b}_0$ of the desired station is obtained by applying d(i) to a determination processing circuit (ME-I) 154 having a matched filter matched to $\alpha_0(i)$. In this case, the direct current component due to the interference wave coming from said cell or another cell contained in d(i) indicates zero or a considerably small value based on the above described principle. Therefore realizing reception demodulation such as not being disturbed by any interference waves can be achieved.

As described above, since the direct current noise contained in an interference wave can be minimized for asynchronous transmission by selecting the header h and the tail h' and using a scramble sequence, the signals can be transmitted without disturbance of said station or other stations and inter-cell interference.

The invention described by referring to the second, third, and fourth embodiments relates to the technology of realizing a direct sequence spread-spectrum (DS-SS) communications system capable of performing right demodulation and detection without being subject to disturbance due to an alternate input noise using orthogonal sequences or biased orthogonal sequences as the address spreading sequences.

When this principle is applied to CDMA systems in which a number of users share the same time slot and the same band, exact detection can be achieved without being subject to the disturbance due to interference noise, by using, as systems such as to control the direct current component of a received interference wave, any of the following systems:

(1) a dummy chip adding system (according to the second embodiment);
(2) an interference control transmission system using an additional frame (according to the third embodiment); and
(3) a scramble sequence combined system (according to the fourth embodiment).

In the system (1) above, the direct current disturbance in the received core frame can be avoided by appropriately designing an extended sequence. In the system (2) above, the received signal on frame H which is produced by modulating a single carrier wave and transmitted separately from a spreading signal (frame G) by each station is demodulated. Using the demodulation output, the direct current component from the interference wave contained in the received core frame can be successfully removed. In the system (3) above, The direct current component of an interference wave can be removed by the effect of the dummy chips h and h', and a scramble sequence.

When the above described systems are applied to DS-SS communications systems, CDMA communications systems, or radio LAN systems, the disturbance by an interference wave can be effectively avoided, thereby achieving an almost noise-free low error ratio under a design condition of small white noise power. In addition, in the case of the system (1), a system with higher frequency utilization can be realized by using many sequences which compose a family of address spreading sequences.

As described above, the first through fourth embodiment of the present invention is realized by utilizing sufficiently signal processing technology.

The first embodiment of the present invention (according to claim 1) comprises: a rstoring function of correctly receiving a reference spreading sequence received through a band transmission path, and obtaining a received frame impulse train; a function of obtaining a value of an uncorrelated region of a cross-correlation function using a reference spreading sequence for the received frame impulse train containing noise not containing direct current components by using an orthogonal sequence having a binary complementary sequence pair as a reference spreading sequence, and estimating noise-dependent correlation function alternate current components; and a function of orthogonalizing noise containing components and converting them into an alternate current by adjusting the direct current component of the partial correlation function into 0 by adding additional noise to the received frame impulse train to avoid an error occurring from the direct current components contained in the noise, obtaining a cross-correlation function by a reference spreading sequence for the adjusted received frame impulse train obtained by adding the adjustment additional noise to the received signal, and estimating the reference spreading sequence components contained in the received frame impulse train. Based on the above listed functions, the signal components not affected by noise components can be extracted from the received signal.

According to the first embodiment of the present invention, a binary complementary sequence pair can be separately transmitted using the leading and trailing portions of the transmission frame to realize the orthogonal reception characteristic. Additionally, a 4-phase or a multiphase signal can be used as an orthogonal spreading sequence to shorten the frame length for transmission, and the receiver can generate a received frame corresponding to a binary complementary sequence from a received frame.

According to the first embodiment of the present invention, noise can be estimated similarly in the FH-SS spread-spectrum communications by the receiver preparing a correspondence mapping between a hopping sequence and the above described binary complementary sequence. Furthermore, when a sequence other than an orthogonal sequence is used as a reference spreading sequence at the transmitter in the DS-SS spread-spectrum communications, a signal component not affected by noise components can be extracted by performing the above described noise estimating process after converting a received frame such that the sequence contained in the received signal into an orthogonal sequence by the mapping circuit at the receiver.

In addition, the present embodiment can effectively work when it is applied to the spread-spectrum communications for performing a continuous waveform process without sampling function modulation. Instead of an orthogonal sequence, a spreading sequence indicating 0 for the direct current component of the uncorrelated region of the auto-correlation function can also be used. Furthermore, the reference spreading sequence can be formed by polarity complementary sequence elements to monitor a sequence of the cross-correlation zero shift value when a partial correlation function is converted for an alternate current by adding additional noise, thus realizing high-speed synchronization.

Therefore, the first embodiment of the present invention can be applied to all transmission systems for modulation using a spreading code with a satisfactory effect.

In the second embodiment of the present invention (according to claim 5), a transmitter for transmitting a transmitting frame generated by modulating an extended sequence obtained by adding dummy chips to an address spreading sequence with transmitting information, and a receiver for receiving a received frame synchronous with the transmission frame transmitted by a desired station, generating a received core frame by removing the dummy chips from the received frame, and generating a correlation function with the core frame by using a matched filter matched to the address spreading sequence used by the transmitter, and determining the transmitting information from the correlation function output.

In the third embodiment of the present invention (according to claim 13), a transmitter for generating and transmitting a transmitting pair frame consisting of a baseband extended transmitting frame and an additional transmitting frame by providing an extended sequence with at least one of a trailing portion and a leading portion of an address spreading sequence added to the spreading sequence, and an additional sequence arranged in a time division manner with the extended sequence, and by modulating a pair of sequences comprising an extended sequence and an additional sequence according to transmitting information, and a receiver for extracting a synchronously received pair frame addressed to a desired station from a received signal, extracting an extended received frame corresponding to the extended transmitting frame and an additional received frame corresponding to the additional transmitting frame from the synchronously received pair frame, generating a demodulation output by demodulating the extended received frame, generating an interference control output consisting of an estimated value of disturbance components due to an interference wave from the additional received frame, and restoring the transmitting information from the demodulation output and the interference control output.

In the fourth embodiment of the present invention (according to claim 22), a transmitter modulates an address spreading sequence, a user spreading sequence, and a cell spreading sequence using a transmitting signal, and a receiver sequentially demodulates a received signal in the above described group of sequences.

According to the above described second embodiment, the direct current component contained in the transmitting signal from another user can be removed by processing the spreading sequence. According to the third embodiment, the interference wave direct current component contained in the received frame can be estimated by transmitting the direct current component contained in the transmitting frame of each station in another frame (channel). The sum of the direct current components in the received waves arriving from other users can be estimated from the amplitude and the polarity of the carrier wave of the frame. According to the fourth embodiment, since a dummy chip is added, the effect of the dummy chip and the correlation characteristic of a scramble sequence remove the direct current component of the interference wave. Thus, according to each of the second through fourth embodiments of the present invention, the SN ratio after the reception demodulation can be enhanced much more than the process gain $G_p$. As a result, when a signal component is extracted from the demodulation output, determination is made with little influence of noise.

## Claims

1. A matched filter output analysis and interference wave control CDMA communications system for use in a spread-spectrum data communications system, comprising:

a transmitter (TX) for transmitting as a reference signal wave a symbol frame waveform generated based on transmitting information and an orthogonal code sequence for use of addressing whose auto-correlation function takes 0 or a relatively small value at an uncorrelated region other than a correlated region of 0 shift and its vicinity, and generating a transmitting wave with amplitude, phase, etc. of the reference signal wave corresponding to the transmitting information; and
a receiver (RX) for applying a received frame waveform containing the transmitting wave and a noise component to a matched filter in order to obtain a cross-correlation function between the received frame waveform and the reference signal wave, and by analyzing a partial correlation function on the uncorrelated region of the cross-correlation function, thus, detecting the reference signal wave component contained in the received frame waveform with little influence of the noise by estimating a noise-dependent cross-correlation function such as obtained when only the noise component is applied to the matched filter, and then by removing the estimated function from the cross-correlation function.

2. The system according to claim 1, wherein:

said analysis of the partial correlation function on the uncorrelated region is performed by copying a part of a partial correlation output waveform of the uncorrelated region and transfering the waveform with an inverted or non-inverted polarity to the uncorrelated region, by generating an I type and N type pseudo-cross-correlation function in all the region consisting of the correlated region and the uncorrelated region, and by frequency-analyzing the pseudo-cross-correlation functions; and

said reference signal wave component contained in the received frame waveform can be detected without an influence of noise by estimating the noise-dependent cross-correlation function having a value on all the frame region based on an analyzed result.

3. The system according to claim 1, wherein

said receiver generates a received frame impulse train with added noise by adding an additional noise chip to each of one or plural chip points of the received frame impulse train, generates a cross-correlation function between the reference spreading sequence and the impulse train, adjusts the additional noise such that a direct current component of the partial correlation function on the uncorrelated region may be set to 0, generates again a cross-correlation function between the reference spreading sequence and adjusted received frame impulse train containing the adjusted additional noise, and detects the reference signal wave component contained in the received frame impulse train from a 0 shift value of the cross-correlation function, with little influence of noise.

4. A receiver apparatus for use in establishing spread-spectrum data communications, comprising:

reference signal generation means for providing a symbol frame as a reference signal generated based on an orthogonal code sequence, whose auto-correlation function takes 0 or a relatively small value at uncorrelated region other than a correlated region of 0 shift and its vicinity;

cross-correlation function generation means (33, 34) for obtaining a cross-correlation function between a received frame and the reference signal; and

analysis means (35, 36) for analyzing a partial correlation function at the uncorrelated region of the cross-correlation function, estimating a noise-dependent cross-correlation function obtained when only noise component contained in the received frame is applied to said cross-correlation function generation means (33, 34), and removing the noise-dependent cross-correlation function from the cross-correlation function, and thereby removing the noise contained in the received frame.

5. A matched filter output analysis and interference control CDMA communications system for use in a spread-spectrum data communications, comprising:

a transmitter (TX) for transmitting a transmitting frame generated by modulating an extended sequence obtained by adding dummy chips to an address spreading sequence with transmitting information; and

a receiver (RX) for receiving a received frame synchronous with the transmission frame transmitted by a desired station, generating a received core frame by removing the dummy chips from the received frame, and generating a correlation function with the core frame by using a matched filter matched to the address spreading sequence used by the transmitter, and determining the transmitting information from the correlation function output.

6. The system according to claim 5, wherein:

an orthogonal sequence whose periodic auto-correlation function takes zero integral value that is a sum of values at all shifts except 0 shift, or a biased orthogonal sequence whose integral value is positive, is prepared as the address spreading sequence, and the transmitting frame generated by modulating the address spreading sequence with the transmitting information; and

said receiver (RX) obtains a correlation function sum which consists of a value at a 0 shift and a sum of an integral value that is a sum of values at all shift except the 0 shift by applying the received core frame which consists of a sum of signals transmitted by transmitters of a number of users to the matched filter (75), then judges the correlation function sum with hard decision method, and restore the transmitting information the desired station has sent out.

7. The system according to claim 5, wherein

a position and polarity of the dummy chip are set such that an interference direct current component contained in the received core frame generated from the synchronously received frame can be 0 or a relatively small value for an auto interference received frame which is the synchronously received frame containing a preceding or delayed frame component due to multipath effect.

8. The system according to claim 5, wherein;

a different orthogonal sequence or a biased orthogonal sequence is assigned to each user as the address spreading sequence;
a plurality of extended sequences in which the position and polarity of the dummy chips are set such that an interference direct current component contained in a received core frame with inter-station interference received from stations other than a desired station may take 0 or a relatively small value are prepared;
each transmitter (TX) generates and transmits the transmitting frame with an assigned extended sequence.

9. The system according to claim 5, wherein:

said transmitter (TX) generates and transmits the transmitting frame with an extended sequence to which the dummy chips are added such that a correlation function between an interference component of a received core frame containing a self-interference and inter-station interference contained and an address spreading sequence of a desired station is 0 or a relatively small value; and
said receiver (RX) restores the transmitting information from the desired station by applying the received core frame to the matched filter (75) and judging the correlation function output at a 0 shift with a hard decision method.

10. The system according to claim 5, wherein

said transmitter (TX) uses as the address spreading sequence a 2- or 4-phase orthogonal sequence whose periodical auto-correlation function takes at least 0 or positive in its integral real value that is a sum of real values at other shift than a 0 shift.

11. A transmitter apparatus for use in spread-spectrum data communications, comprising:

frame generation means (61 - 63) for generating a transmitting frame by modulating with the transmitting information an extended sequence obtained by adding dummy chips to a prepared address spreading sequence; and
transmission means for transmitting the transmitting frame generated by said frame generation means (61 - 63).

12. A receiver apparatus for use in spread-spectrum data communications, comprising:

reception means (71 - 73) for receiving a transmitted frame synchronous with a transmitted frame from a desired station and outputting a synchronously received frame;
core frame generation means (74) for generating a received core frame by removing dummy chips from the received frame;
matched filter means (75 - 77) for generating a correlation output from the received core frame and assigned address sequence; and
judging means (78) for determining transmitted information based on the correlation output.

13. A matched filter output analysis and interference control CDMA communications system, comprising:

a transmitter (TX) for generating and transmitting a transmitting pair frame consisting of a baseband extended transmitting frame and an additional transmitting frame by providing an extended sequence with at least one of a trailing portion and a leading portion of an address spreading sequence added to the spreading sequence, and an additional sequence arranged in a time division manner with the extended sequence, and by modulating a pair of sequences comprising an extended sequence and an additional sequence according to transmitting information; and

a receiver (RX) for extracting a synchronously received pair frame addressed to a desired station from a received signal, extracting an extended received frame corresponding to the extended transmitting frame and an additional received frame corresponding to the additional transmitting frame from the synchronously received pair frame, generating a demodulation output by demodulating the extended received frame, generating an interference control output consisting of an estimated value of disturbance components due to an interference wave from the additional received frame, and restoring the transmitting information from the demodulation output and the interference control output.

14. The system according to claim 13, wherein

said transmitter (TX) generates an intermediate transmission additional frame by modulating with the transmitting information user carrier waves which are assigned to respective users and are orthogonal to each other, and generates the transmitting pair frame such that each of the frames occupies substantially the same frequency band when radio carrier waves are modulated with both the intermediate transmission additional frame and an extended sequence modulated by the transmitting information respectively; and

said receiver (RX) demodulates the received signal with a local carrier wave, generates the synchronously received baseband pair frame, and restores the transmitting information from the synchronously received pair frame.

15. The system according to claim 13, wherein

said transmitter (TX) separates a frequency band occupied by the transmission extended frame from a frequency band occupied by the transmitting additional frame, and both frames are simultaneously transmitted.

16. The system according to claim 13, wherein:

said transmitter (TX) makes a multiframe configuration for a sequence of the transmitting pair frame of each station, and transmits the transmitting pair frame using a part of the multiframe as a pilot frame sequentially occupied by each user; and

said receiver (RX) calibrates the interference control output based on the transmitting pair frame received as the pilot frame.

17. The system according to claim 16, wherein:

said transmitter (TX) provides on the pilot frame of the multiframe a stop period for stopping transmission from users belonging to a cell; and

said receiver (RX) calibrates the interference wave control output from the synchronously received pair frame received during the stop period.

18. The system according to claim 13, wherein

said transmitter (TX) uses as the address spreading sequence a 2- or 4-phase orthogonal sequence whose periodical auto-correlation function takes at least 0 or positive in its integral real value that is a sum of real values at other shift than a 0 shift.

19. The system according to claim 13, wherein

said transmitter (TX) transmits the transmitting additional frame composed of chirp signals which are modulated with the transmitting information and orthogonal each other.

20. The system according to claim 13, wherein:

said transmitter (TX) generates and transmits a baseband transmitting pair frame using an amended sampling function chip waveform; and

said receiver (RX) produces a non-distortion chip impulse train from the received extended frame by obtaining a correlation output with the chip waveform, and reconstructs the transmitting information using the non-distortion chip impulse train.

**21.** A receiver apparatus for use in spread-spectrum data communications, comprising:

first extraction means (101, 102) for extracting a synchronously received frame addressed to a desired station;
second extraction means (103, 104, 108) for extracting a received extended frame corresponding to a transmitted extended frame, and a received additional frame corresponding to a transmitted additional frame;
demodulated output generation means (105 - 107) for demodulating the received extended frame and generating a demodulated output;
interference wave control output generation means (110, 111) for generating an interference wave control output that is an estimated value of a disturbance component due to the interference wave; and
restoration means (107, 112) for restoring transmitted information from the demodulation output and the interference wave control output.

**22.** A matched filter output analysis and interference control CDMA communications system, comprising:

a transmitter (TX) for modulating with transmitting information an extended sequence obtained by adding a leading additional sequence and a trailing additional sequence respectively to a leading portion and a trailing portion of an address spreading sequence, modulating the modulated output with a scramble sequence which belongs to a family of code sequences having a small correlation region indicating 0 or a small absolute value around a zero shift except the zero shift of an auto-correlation function and indicating 0 or a small absolute value around a zero shift including the zero shift of a cross-correlation function, and transmitting a baseband extended frame modulated with of the scramble sequences; and
a receiver (RX) for extracting a synchronously received extended frame synchronous with a desired station from a received signal, extracting a received core frame containing the address spreading sequence of the desired station from the synchronously received extended frame, descrambling the received core frame using the scramble sequences, thereby generating a descramble frame, and restoring the transmitting information from a correlation function output obtained by applying the descrambled frame to a matched filter (105) matched to the address spreading sequence of the desired station.

**23.** The system according to claim 22, wherein:

said extended sequence is provided using each additional sequence such that an absolute value of an interference direct current component due to a preceding or a succeeding extended sequence given to other stations can be minimized, and user scramble sequences and cell scramble sequences belonging to respective families are provided ;
said transmitter (TX) generates the transmitting baseband extended frame by sequentially modulating the extended sequence, the user scramble sequence, and the cell scramble sequence with the transmitting information; and
said receiver (RX) generates the descrambled frame by sequentially multiplying the received core frame by a cell scramble sequence to which the desired station belongs and a user scramble sequence of the desired station, and restores the transmitting information from a correlation function output obtained by applying the descrambled frame to the matched filter.

**24.** A transmitter apparatus for use in spread-spectrum data communications, comprising:

modulation means (142) for modulating an extended sequence obtained by adding a leading additional sequence and a trailing additional sequence to leading and trailing portions of an address spreading sequence respectively;
frame generation means (143) for generating a transmitting baseband extended frame by modulating with a modulated extended sequence output produced by said modulation means (142) as a user scramble sequence or a intra-cell scramble sequence both of which belong to one of family of code sequences, having a small correlation region indicating 0 or a small absolute value in a vicinity of a 0 shift except the 0 shift of an auto-correlation function, and indicating 0 or a small absolute value in a vicinity of a 0 shift including the 0 shift of a cross-correlation function; and
transmission means for transmitting the transmitting baseband frame generated by said frame generation means.

**25.** A receiver apparatus for use in spread-spectrum data communications, comprising:

first extraction means (151) for extracting a synchronously received extended frame synchronous with a desired station from a received signal ;

second extraction means (151) for extracting a received core frame containing an address spreading sequence of a desired station from the synchronously received extended frame;

frame generation means (152, 153) for generating a descrambled frame by demodulating the received core frame with a scramble sequence;

function output generation means (154) for generating a correlation function output for the descrambled frame; and

restoration means for restoring transmitting information from the correlation function output.

$\underline{T X}$

FIG. 1

FIG. 2

FIG. 3A

FIG. 3B

FIG. 4

FRAME INDICATION

SPREADING SEQUENCE $m(t)$
(IMPULSE)

BINARY TRANSMITTING DATA $b$

TRANSMITTING FRAME $s(t)$
(IMPULSE)

TRANSMITTING FRAME $s_q(t)$
(RECTANGULAR WAVE FORM)

EP 0 966 111 A2

<u>TX</u>

FIG. 5

FIG. 6A

FIG. 6B

FIG. 6C

FIG. 6D

FIG. 7

FIG. 8

EP 0 966 111 A2

FIG. 9

FIG. 10A

FIG. 10B

FIG. 10C

FIG. 11

$$o_1(t) = \sqrt{2}\cos\omega_b t$$

FIG. 12A-1

$$e_2(t) = \sqrt{2}\cos 2\omega_b t$$

$t(\times T_c)$

FIG. 12B-1

$\overline{\lambda}_l \qquad \overline{\lambda}_r$

$\lambda_l \qquad \lambda_r$

FIG. 12A-2

$\lambda_l \qquad \lambda_r$

FIG. 12B-2

$S_l = \overline{\lambda}_r \qquad S_r = \overline{\lambda}_l$

$S_l = \lambda_r \qquad S_r = \lambda_l$

FIG. 12A-3

FIG. 12B-3

FIG. 13A

FIG. 13B

FIG. 13C

FIG. 14A       FIG. 14B

EP 0 966 111 A2

FIG. 15A

FIG. 15B

FIG. 15C

49

FIG. 16

FIG. 17

FIG. 18

EP 0 966 111 A2

$$F_0 \qquad F_1 \qquad F_{N-1}$$

$s(t)$

| h | $\alpha_1$ | d | $\alpha_2$ | h | $\alpha_1$ | d | $\alpha_2$ | $\cdots$ | h | $\alpha_1$ | d | $\alpha_2$ |

## FIG. 19A

$$F_0 \qquad F_1 \qquad F_{N-1}$$

$r(t)$

| h | $\alpha_1$ | d | $\alpha_2$ | h | $\alpha_1$ | d | $\alpha_2$ | $\cdots$ | h | $\alpha_1$ | d | $\alpha_2$ |

$r(t-\tau)$

| h | $\alpha_1$ | d | $\alpha_2$ | h | $\alpha_1$ | d | $\alpha_2$ | | h | $\alpha_1$ | d | $\alpha_2$ |

$\tau \qquad \{x_1\} \qquad \{x_2\} \qquad \tau$

## FIG. 19B

FIG. 20

FIG. 21

| k | -3 | -2 | -1 | +O | +1 | +2 | -3 |
|---|---|---|---|---|---|---|---|
| $X_{DC}(A \rightarrow A)$ | O | O | O | 4 | O | O | O |

CHARACTERISTIC OF THE SELF-INTERFERENCE

# FIG. 22A

| k | -3 | -2 | -1 | O | +1 | +2 | +3 |
|---|---|---|---|---|---|---|---|
| $Y_{DC}(B \rightarrow A)$ | -2 | O | +2 | +2 | O | O | O |
| $Y_{DC}(C \rightarrow A)$ | O | O | O | +2 | +2 | O | -2 |
| $Y_{DC}(A \rightarrow B)$ | O | +2 | O | +2 | O | +2 | O |
| $Y_{DC}(C \rightarrow B)$ | O | -2 | +2 | +2 | O | O | O |
| $Y_{DC}(A \rightarrow C)$ | O | +2 | O | +2 | O | +2 | O |
| $Y_{DC}(B \rightarrow C)$ | O | O | O | +2 | +2 | -2 | O |

CHARACTERISTICS OF THE INTER-STATION INTERFERENCE

# FIG. 22B

EP 0 966 111 A2

FIG. 23

FIG. 24

F I G. 25

FIG. 26

$R\alpha(f)$

$-Lfo$     $O$     $Lfo$

$|fo|$

$Rr(f)$

$-\gamma_N$    $-\gamma_0$   $+\gamma_0$    $+\gamma_N$

$B_{0-}$    $B_{0+}$

$F_{Sep}(f)$

$B_{ex0-}$     $B_{ex0+}$

$V_{00}$

$V_{ex0}$

FIG. 27

FIG. 28A

FIG. 28B

FIG. 29

FIG. 30

EP 0 966 111 A2

$G_s(i)$

$C_s(i)$

$s_0(t)$

| $b_0h_0$ | $b_0\alpha_0(i)$ | $b_0h_0'$ | $b_0'h_0$ | $b_0'\alpha_0(i)$ | $b_0'h_0'$ |
|---|---|---|---|---|---|
| $\theta_0(i)$ | $\theta_0(i)$ | $\theta_0(i)$ | $\theta_0(i)$ | $\theta_0(i)$ |

$T_D$

$T$

## FIG. 31A

$G_R(i)$

$C_R(i)$

$r_0(t)$

| $b_0h_0$ | $b_0\alpha_0(i)$ | $b_0h_0'$ | $b_0'h_0$ | $b_0'\alpha_0(i)$ | $b_0'h_0'$ |
|---|---|---|---|---|---|
| $\theta_0(i)$ | $\theta_0(i)$ | $\theta_0(i)$ | $\theta_0(i)$ | $\theta_0(i)$ |

$r_0(t-\tau_{00})$

| $b_0h_0$ | $b_0\alpha_0(i+j)$ | $b_0h_0'$ | $b_0'h_0$ | $b_0'\alpha_0(i+j)$ | $b_0'h_0'$ |
|---|---|---|---|---|---|
| $\theta_0(i+j)$ | $\theta_0(i+j)$ | $\theta_0(i+j)$ | $\theta_0(i+j)$ | $\theta_0(i+j)$ |

$\tau_{00}$

$r_k(t)$

| $b_kh_k$ | $b_k\alpha$ | $b_kh_k'$ | $b_k'h_k$ | $b_k'\alpha_k(i)$ | $b_k'h_k'$ |
|---|---|---|---|---|---|
| $\theta_k(i+j')$ | $\theta_k(i+j')$ | $\theta_k(i+j')$ | $\theta_k(i+j')$ | $\theta_k(i+j')$ |

$\tau_{0k}$

## FIG. 31B

TX

141          142          143

$b_{kuu}$ ○———————⊗—————⊗—————⊗——————→ $G_{sk}(i)$

↑            ↑            ↑
○            ○            ○

$G[\alpha_k(i)]$      $G[\theta_k(i)]$      $G[\varphi_m(i)]$

FIG. 32

EP 0 966 111 A2

RX

$G_{R0}(i)$ ○—→ FE $\overset{151}{}$ → $C_{R0}(i)$ → ⊗ $\overset{152}{}$ → ⊗ $\overset{153}{}$ → $d(i)$ → MF−I $[\alpha_0(i)]$ $\overset{154}{}$ → $\hat{b}_{00}$

○ $e_{C0}$

○ $C[\varphi_0(i)]$

○ $C[0_0(i)]$

FIG. 33